(19) Europäisches Patentamt
European Patent Office
Office européen des brevets

(11) EP 2 290 957 B1

(12) **EUROPEAN PATENT SPECIFICATION**

(45) Date of publication and mention of the grant of the patent:
**31.07.2013 Bulletin 2013/31**

(51) Int Cl.:
***H04N 5/445*** *(2011.01)* ***H04N 21/431*** *(2011.01)*
***H04N 21/475*** *(2011.01)* ***H04N 21/482*** *(2011.01)*
***G06F 17/30*** *(2006.01)*

(21) Application number: **10158280.7**

(22) Date of filing: **29.03.2010**

(54) **Display processing apparatus and display processing method**

Anzeigeverarbeitungsvorrichtung und Anzeigeverarbeitungsverfahren

Appareil de traitement d'affichage et procédé de traitement d'affichage

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **28.08.2009 JP 2009198846**

(43) Date of publication of application:
**02.03.2011 Bulletin 2011/09**

(73) Proprietor: **Kabushiki Kaisha Toshiba**
**Tokyo 105-8001 (JP)**

(72) Inventor: **Iwahara, Hiroaki**
**Tokyo 105-8001 (JP)**

(74) Representative: **Henkel, Breuer & Partner**
**Patentanwälte**
**Maximiliansplatz 21**
**80333 München (DE)**

(56) References cited:
**EP-A1- 1 051 034**
**EP-A1- 1 513 341**
**EP-A1- 1 804 509**
**EP-A2- 1 785 814**
**US-A1- 2008 313 673**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 290 957 B1

## Description

CROSS-REFERENCE TO RELATED APPLICATIONS

This application is based upon and claims the benefit of priority from Japanese Patent Application No. 2009-198846, filed Aug. 28, 2009, the entire contents of which are incorporated herein by reference.

BACKGROUND

1. Field

One embodiment of the invention relates to a display processing apparatus and a display processing method.

2. Description of the Related Art

In recent years, with increased capability of AV equipment for storing contents (video/audio data) and improved seamless accessibility of contents between equipment, let alone within the same equipment, or on a network, there has been a proliferation in the number of contents accessible to users. Accordingly, there have been disclosed receivers that allows users to select and view such contents.

For example, Japanese Patent Application Publication (KOKAI) No. 2004-32624 discloses a conventional technology in which a receiver switches genres of contents to be displayed in response to the depression of a key. According to the conventional technology, each key is assigned a genre, and thereby the genres can be switched easily by the depression of a key.

Besides, with AV equipment including a digital television receiver, various contents can be viewed. Examples of the contents include content already stored in a storage medium such as a hard disk drive (HDD) and digital broadcast content. Further, through an electronic program guide (FPG), contents to be broadcasted can be checked.

When there are numerous contents including those already stored in HDD, those to be broadcasted according to EPG information, etc., even if the contents are classified into genres, such as those already stored in HDD and those indicated by EPG information, with the conventional technology, there may be a considerable number of contents of each genre. Accordingly, it is difficult to specify content desired by the user. In addition, since the user operates AV equipment with a remote controller, there is a need for a technology capable of specifying content desired by the user with a simple operation.

EP 1 785 814 discloses a display device, in which information related to specified information, which is displayed large in a center portion of a display, by a selected relation criterion is displayed aligned on a selection axis, while information related by other relation criteria is displayed aligned on non-selection axes. Information selected as the specified information can be sequentially changed in accordance with an input from an up or down direction key, and a relation criterion of information displayed on the selection axis and the non-selection axes can be sequentially changed in accordance with an input from a left or right direction key.

Further background state of the art is disclosed in EP 1 513 341 A1, EP 1 804 509 A1, EP 1 051 034 A1 and US 2008 313673 A1.

It is therefore an object of the invention to provide a display processing apparatus and a display processing method capable of specifying content desired by the user with a simple operation.

SUMMARY OF THE INVENTION

According to the present invention this object is achieved by a display processing method according to claim 1 and by a corresponding display processing apparatus. The dependent claims are related to different advantageous aspects of the invention.

BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary block diagram of a digital television (TV) display device according to an embodiment of the invention;
FIG. 2 is an exemplary external view of a remote controller in the embodiment;

FIG. 3 is an exemplary schematic diagram of metadata when a TV program is content in the embodiment;
FIG. 4 is an exemplary schematic diagram of a structure of a table where an electronic program guide (EPG) storage module stores EPG information in the embodiment;
FIG. 5 is an exemplary schematic diagram of an EPG displayed by a display module in the embodiment;
FIG. 6 is an exemplary schematic diagram of a past EPG displayed by the display module in the embodiment;
FIG. 7 is an exemplary schematic diagram of a list of personal video recorder (PVR) contents displayed by the display module in the embodiment;
FIGS. 8A and 8B are exemplary schematic diagrams of a screen displayed by the display module when a green key corresponding to program search is pressed on the display screen illustrated in FIGS. 5 to 7 in the embodiment;
FIGS. 9A and 9B are exemplary schematic diagrams of display information in the embodiment;
FIGS. 10A and 10B are exemplary schematic diagrams for explaining items, item axes, areas in the embodiment;
FIGS. 11 to 15 are exemplary schematic diagrams for explaining related content list information in the embodiment;
FIG. 16 is an exemplary schematic diagram of the related content list information in the embodiment;
FIG. 17 is an exemplary schematic diagram for explaining the screen transition of the digital TV display device in the embodiment;
FIG. 18 is an exemplary schematic diagram of a related content list screen that displays options for content in the embodiment;
FIG. 19 is an exemplary schematic diagram of a list of options displayed depending on category in the embodiment;
FIG. 20 is an exemplary schematic diagram for explaining the transition of the related content list screen when categories are switched in the embodiment;
FIG. 21 is an exemplary schematic diagram for explaining the screen transition between a program guide and the related content list screen in the embodiment;
FIG. 22 is an exemplary schematic diagram of a table structure of a history information storage module in the embodiment;
FIGS. 23A to 23C are exemplary schematic diagrams for explaining the transition of an icon displayed together with display information of key content on the related content list screen in the embodiment;
FIG. 24 is an exemplary schematic diagram for explaining the transition of the related content list screen based on operation history in the embodiment;
FIG. 25 is an exemplary schematic diagram for explaining the transition of the related content list screen based on category switch and the operation history in the embodiment;
FIG. 26 is an exemplary schematic diagram of a key content history list displayed by a display controller in the embodiment; and
FIG. 27 is an exemplary flowchart of the operation of the digital TV display device from display of a program guide to display of the related content list screen in the embodiment.

DETAILED DESCRIPTION

Various embodiments according to the invention will be described hereinafter with reference to the accompanying drawings.

Although a display processing apparatus and a display processing method of the embodiments will be described below as being applied to a digital television (TV) display device, this is by way of example only and is not to be construed to be limiting. The display processing apparatus and the display processing method may be applied to any AV equipment capable of displaying video or the like.

An embodiment of the invention will now be described with reference to FIG. 1. First, a description will be given of the functional configuration of a digital TV display device 100 according to the embodiment. FIG. 1 is a block diagram of the digital TV display device 100. As illustrated in FIG. 1, the digital TV display device 100 comprises a history information storage module 140, an electronic program guide (EPG) storage module 150, a recorded program storage module 160, a display module 170, a connection interface (I/F) 180, and a communication module 190. The digital TV display device 100 is connected to an external recorded program storage module 161 via the connection I/F 180 and a digital TV display device 195 in an external network via the communication module 190.

Although not illustrated in the drawings, the digital TV display device 100 further comprises a processor, such as an application-specific integrated circuit (ASIC) or a central processing unit (CPU), and a storage device. Examples of the storage device include a read only memory (ROM) that stores a predetermined computer program for controlling the digital TV display device 100 and a random access memory (RAM) that provides a work area for the processor. The cooperation of the processor and the computer program stored in the storage device implements functional modules including an operation receiver 101, a metadata retriever 102, a metadata acquiring module 103, a relation calculator 104, a display information generator 105, a display controller 106, a video reproducer 107, and a broadcast receiver 108. In the following, video obtained by recording a TV program or the like will be referred to as content.

With the digital TV display device 100 illustrated in FIG. 1, in addition to content currently being broadcasted, content stored in the recorded program storage module 160 (hereinafter, "personal video recorder (PVR) content") can be viewed according to user operation.

The digital TV display device 100 further comprises digital broadcast tuners (not illustrated) corresponding to the number of broadcast stations. The digital broadcast tuners each automatically store content in the recorded program storage module 160. Hereinafter, the content automatically stored by the digital broadcast tuners will be referred to as "auto-recorded content". Unless the user provides an operation to store the auto-recorded content as the PVR content, the auto-recorded content is automatically deleted when a week has elapsed since the recording thereof. Thus, with the digital TV display device 100 of the embodiment, the user can view contents that have already been broadcasted in the past one week.

As storing auto-recorded contents for one week, the digital TV display device 100 also stores an EPG for the past one week in the EPG storage module 150, which will be described later. Thus, regarding contents broadcasted for the past one week, the user can select desired content from the EPG (hereinafter, "past EPG") and view it.

In the digital TV display device 100 of the embodiment, contents are classified by category into those currently being broadcasted and to be broadcasted, PVR contents, and auto-recorded contents. The digital TV display device 100 receives an operation for search, list display, etc. with respect to each category. In other words, according to the embodiment, contents are classified into those currently being broadcasted and to be broadcasted, PVR contents, and auto-recorded contents as search ranges or display ranges. The display screen of contents is prepared for each category. A description will be given of the reason for preparing the display screen of contents for each category.

The digital TV display device 100 of the embodiment comprises the digital broadcast tuners (not illustrated) corresponding to the number of broadcast stations, and stores contents of the respective broadcast stations for one week. Besides, the digital TV display device 100 is provided with various contents from the broadcast stations through communications satellite (CS) broadcasting and broadcasting satellite (BS) broadcasting as well as digital terrestrial broadcasting. With an increase in the capacity of the recorded program storage module 160, the amount of PVR contents tends to increase. As a result, if all the contents are displayed on the same display screen, it is difficult for the user to recognize the contents.

That is, in the case of personal computers, the resolution can be freely set, and various contents can be displayed by increasing the definition. On the other hand, even if the digital TV display device 100 has a wide screen, the resolution is predefined. Therefore, the display of numerous contents as described above makes it difficult to display each content and select content. In view of this, according to the embodiment, the digital TV display device 100 displays contents with respect to each category to reduce information displayed at a time and achieve display appropriate for the resolution thereof.

A remote controller 90 receives operation information from the user through the buttons or keys, etc. , and sends the operation information to the digital TV display device 100.

FIG. 2 is an external view of the remote controller 90. As illustrated in FIG. 2, the remote controller 90 comprises a power key 201, a mode change key 202, direct selection keys 203 for satellite digital broadcast channels, direct selection keys 218 for terrestrial digital broadcast channels, a cursor key 204, an enter key 205, a program guide key 206, a page change key 207, a navigation key 208, a return key 209, an end key 210, a blue key 211a, a red key 211b, a green key 211c, a yellow key 211d, a terrestrial digital-analog (D/A) switch key 212, a BS-CS switch key 213, a dual screen display switch key 214, a channel up/down key 215, a volume key 216, and a light emitter 217.

Among the keys, the blue key 211a, the red key 211b, the green key 211c, and the yellow key 211d are used to display a content display screen, change the category for the content display screen, and the like.

As described above, the number of the keys of the remote controller 90 is reduced to a certain extent so that the user can use it easily. The digital TV display device 100 is configured as described below to allow the user to easily find desired content from numerous contents with the remote controller 90. Thus, the user can detect content with a simple operation.

The recorded program storage module 160 is a storage medium such as a hard disk drive (HDD) or memory for storing content such as video. The recorded program storage module 160 stores metadata provided with content in association with the content.

The term "metadata." as used herein refers to information on content (content information). The recorded program storage module 160 stores metadata with respect to items by which contents are classified. More specifically, the recorded program storage module 160 stores, for items such as the title of content, the channel, the broadcast date and time, the cast, the program content (a keyword or a sentence indicating the content) , and the genre, content information as to the items (i.e. , metadata of the content) in an associated manner.

FIG. 3 illustrates an example of the metadata when a TV program is the content. The metadata illustrated in FIG. 3 represents information related to the content of a recorded TV program. The recorded program storage module 160 stores as metadata the information, such as the title of the TV program "Lunchtime Comedy Show", the channel "00", the broadcast date and time "August 1, 2008, 12:00 - 12:40", the cast "xxxxx, yyyyy", the subtitle "Great line up of comedians invite you to enjoy a noon of hilarious entertairfment", and the genre "comedy".

Although an example is described above in which the metadata is provided as being preset, this is by way of example and not of limitation. The recorded program storage module 160 may receive information from the user through an input device such as the remote controller 90 or the keyboard of a personal computer, and store it as metadata in association with the content.

The EPG storage module 150 is a storage medium such as an HDD or a memory for storing an EPG obtained from an external server that manages and distributes the EPG or through TV broadcasting. More specifically, the EPG storage module 150 obtains via the communication module 190 an EPG for TV, cable television (CATV), CS broadcasting, BS broadcasting, and the like from a service provider server connected through a network such as the Internet. Alternatively, the EPG storage module 150 receives an EPG broadcasted through TV broadcasting via an antenna or a cable (not illustrated). Thus, the EPG storage module 150 stores the EPG. Further, the ERG storage module 150 stores status for each content.

FIG. 4 is a schematic diagram of a structure of a table where the EPG storage module 150 stores EPG information. As illustrated in FIG. 4, the EPG storage module 150 stores such items as broadcast date and time, program information, broadcast station, broadcast period, status, and the like in association with one another with respect to each content (program).

The program information includes, as information (metadata) about content, for example, title, cast, keyword, genre, and the like. The information may be obtained from an EPG and also from the Internet or the like.

The status refers to information indicating the current status of content, such as "currently broadcasted", "programmed (to be timer-recorded)", "currently recorded", "timer-recorded", "currently archived", and "archived", which are associated with one another.

The mark "o" presented in the status columns of the table indicates whether each content is in the status. For example, if a box of the "currently broadcasted" column is marked with "o", it means that corresponding content is currently being broadcasted. If a box of the "programmed" column is marked with "o", it means that corresponding content is to be stored as PVR content when broadcasted. If a box of the "currently recorded" column is marked with "o", it means that corresponding content is currently being recorded as PVR content.

In addition, if a box of the "timer-recorded" column is marked with "o", it means that corresponding content is stored as PVR content. If a box of the "currently archived" column is marked with "o", it means that corresponding content is currently being recorded as auto-recorded content. Further, if a box of the "archived" column is marked with "o", it means that corresponding content has been recorded as auto-recorded content.

That is, by referring to the status columns of the table in the EPG storage module 150, it is possible to specify which category each content is classified into, content currently being broadcasted, content to be broadcasted, PVR content, or auto-recorded content.

The metadata acquiring module 103 acquires information such as broadcast date and time, program information, broadcast channel, and broadcast period. The display controller 106 generates an ERG and various content list screens to display them.

The EPG contains list information on programs to be broadcasted during a period from the present time to a certain point in the future (e.g. , after one week) . The EPG also contains list information (past EPG) on programs (auto-recorded contents) broadcasted during a period from the present time to a certain point in the past (e.g., before one week). With this, by referring to the past EPG, the user can select content from the past EPG and view the auto-recorded content.

Incidentally, it is assumed that the information on programs stored in the EPG storage module 150 is periodically updated. For example, with the lapse of time or user operation, the setting of the status may be updated, and a record of content may be added or deleted.

The connection I/F 180 is an interface to the external recorded program storage module 161. Through the connection I/F 180, the digital TV display device 100 can store content in the external recorded program storage module 161. As with the recorded program storage module 160, the external recorded program storage module 161 stores metadata provided with content in association with the content. As in the case of the recorded program storage module 160, EPG information related to the content stored in the external recorded program storage module 161 is also stored in the EPG storage module 150.

The communication module 190 communicates with various devices that store content including the digital TV display device 195 via a network. The communication module 190 exchanges content (PVR content, auto-recorded content, etc.) and the like with other devices, and also transmits/receives the metadata of the content and an EPG stored in the digital TV display device 195. Thus, the digital TV display device 100 is capable of searching for or displaying content and the like stored in the digital TV display device 195.

In other words, the digital TV display device 100 allows the user to retrieve and view not only content stored therein but also content stored in other devices regardless of where the content is stored.

The displaymodule 170 includes, for example, a liquid crystal display (LCD) for displaying text and an image, and displays content of a received TV program, stored content, an EPG, and the like.

FIG. 5 illustrates an example of an EPG displayed by the display module 170 that indicates contents currently being broadcasted and to be broadcasted. As illustrated in FIG. 5, an EPG 502 is displayed on a display screen 501 of the digital TV display device 100. The EPG 502 includes a date and time display area 511 and a broadcast station display area 512. Displayed in the broadcast station display area 512 are a thumbnail 513 indicating a broadcast station, a broadcast station 514, and a program list 515 for each broadcast station. In addition, a time display area 516 indicates a time period in which each content is provided so that the user can visually recognize it, and a present time bar 517 indicates the present time.

As illustrated in FIG. 5, the EPG 502 further includes an operation guide area 503 for operation related to the EPG 502 or display of a content list screen. Operation items displayed in the operation guide area 503 correspond to the blue key 211a, the red key 211b, the green key 211c, and the yellow key 211d, respectively. That is, when one of the keys are pressed, operation corresponding to the key is performed. For example, if the user presses the green key 211c corresponding to a program search 503a, a program search screen is displayed for search for content currently being broadcasted or content to be broadcasted.

FIG. 6 illustrates an example of a past EPG displayed by the display module 170 that indicates auto-recorded contents. As illustrated in FIG. 6, a past EPG 602 is displayed on a display screen 601 of the digital TV display device 100. The past EPG 602 is basically similar to the EPG 502 illustrated in FIG. 5, and the description will not be provided. The past EPG 602 may be displayed in any manner such as, for example, by a specific operation to display the past EPG 602 or by operation to back from the EPG 502 indicating contents currently being broadcasted.

The past EPG 602 illustrated in FIG. 6 also includes an operation guide area 603 for operation related to the past EPG 602 or display of a content list screen. Operation items displayed in the operation guide area 603 correspond to the blue key 211a, the red key 211b, the green key 211c, and the yellow key 211d, respectively. That is, when one of the keys are pressed, operation corresponding to the key is performed. For example, if the user presses the green key 211c corresponding to a program search 603a, a program search screen is displayed for search for auto-recorded content.

FIG. 7 illustrates an example of a PVR content list displayed by the display module 170. The PVR content list may be displayed in a conventional manner. As illustrated in FIG. 7, the PVR content list is displayed on a display screen 701 of the digital TV display device 100. For example, the PVR content list indicates a list of PVR contents with respect to each genre. The PVR contents need not necessarily be displayed for each genre, and may be displayed in any other form including any conventional form.

The PVR content list illustrated in FIG. 7 also includes an operation guide area 702 for operation related to the PVR content list or display of a content list screen. Operation items displayed in the operation guide area 702 correspond to the blue key 211a, the red key 211b, the green key 211c, and the yellow key 211d, respectively. That is, when one of the keys are pressed, operation corresponding to the key is performed. For example, if the user presses the green key 211c corresponding to a program search 702a, a program search screen is displayed for search for PVR content.

FIGS. 8A and 8B each illustrate an example of a screen displayed by the display module 170 when the green key 211c corresponding to a program search is pressed on the display screen as illustrated in FIGS. 5 to 7. As illustrated in FIG. 8A, when the user selects a program search, the display module 170 displays a window 801. The window 801 selectably displays a search navigator 801a and a related program list 801b. If the user selects the related program list 801b using the remote controller 90, contents related to content (for example, content 802) selected on the display screen are searched for in the digital TV display device 100. Incidentally, if the search navigator 801a is selected, a conventional search screen is displayed, and the description will not be provided.

FIG. 8B illustrates a search range setting screen for related contents displayed when the related program list 801b is selected. In the example of FIG. 8B, search objects vary depending on the display screen where the related program list 801b is selected.

For example, if the search range setting screen is displayed from the EPG 502 illustrated in FIG. 5, the search objects are broadcast programs 802a, i.e., contents currently being broadcasted and to be broadcasted are searched for. If the search range setting screen is displayed from the past EPG 602 illustrated in FIG. 6, the search objects are programs broadcasted in the past and auto-recorded contents stored in the recorded program storage module 160 are searched for. If the search range setting screen is displayed from the PVR content list illustrated in FIG. 7, the search objects are timer-recorded programs and PVR contents stored in the recorded program storage module 160 are searched for.

Upon searching for contents belonging to a category set to be searched for on the search range setting screen illustrated in FIG. 8B, the operation receiver 101 receives an operation to set the condition of contents to be displayed. It is herein assumed that channel 802b, recorder 802c, and date and time 802d can be set as the search condition. With the channel 802b, a channel that provides contents is set as the search condition. Examples of the search condition for the channel 802b include "all", "digital terrestrial broadcasting", "CS broadcasting", and "BS broadcasting". The operation receiver 101 may receive an operation to eliminate a channel from the search objects.

The recorder 802c is an item displayed in the search range setting screen illustrated in FIG. 8B, and used to set a storage device as a search object. Generally, a search is performed on only contents stored in the recorded program storage module 160. With the recorder 802c, the user can set the external recorded program storage module 161 connected via the connection I/F 180, the digital TV display device 195 connected via a network, and the like as a search object. According to the search condition set on the search range setting screen illustrated in FIG. 8B, the display module 170 displays related content list information.

In this manner, by limiting a search range on the search range setting screen illustrated in FIG. 8B, unnecessary contents are not displayed. This reduces a burden on the user to determine a program (content) to view or record from a related content list screen, resulting in an improvement in the operability of the related content list screen.

The displaymodule 170 displays list information (see FIG. 16) for the user to search for content. In the list information, pieces of display information (see FIGS. 9A and 9B) generated by the display information generator 105, which will be described later, are arranged by the display controller 106, which will be described later. The display information is information about content. The display module 170 displays items in the list information (see FIG. 16).

The broadcast receiver 108 receives the content of video (TV program) broadcasted by TV broadcasting through an antenna or a cable (not illustrated).

The video reproducer 107 acquires the content of video that the user desires to reproduce. Examples of the content include the content of a TV program, etc. received by the broadcast receiver 108 and the content of video stored in the recorded program storage module 160. The video reproducer 107 decodes (reproduces) the content thus acquired, and outputs it to the display controller 106.

The operation receiver 101 receives user's operation. More specifically, when the user operates an input device, the operation receiver 101 recognizes the operation and receives an input provided by the operation. Examples of the input device include the remote controller 90 provided with operation buttons, a keyboard (not illustrated), and a mouse (not illustrated). The user' s operation may be pressing an operation button on the remote controller 90, typing on the keyboard, moving the mouse or pressing the mouse button, and the like.

The operation receiver 101 receives the selection of content used as a search reference or a key (key content). More specifically, the operation receiver 101 receives the selection of content belonging to a category currently displayed by the display module 170 from among contents currently being broadcasted and to be broadcasted, auto-recorded contents, and PVR contents.

For example, when the user searches for desired content as well as contents related to the desired content from a plurality of contents, he/she selects content (key content) as a search key using the input device from a plurality of contents of the EPG displayed on the display module 170. The operation receiver 101 receives this selection of the key content, specifies the key content as a search key, and also receives an instruction to search for the contents. The key content need not necessarily be specified according to the user' s selection of the key content, and it may be specified from the system. The key content may be content being reproduced. In this case, when the user operates the input device while content is being reproduced, the operation receiver 101 receives the user's operation as the selection of the content as the key content, i.e., an instruction to search for contents.

As will be described in detail later, the operation receiver 101 receives an instruction as to display information of focused content in a related content list screen (see FIG. 16) displayed on the display module 170. The related content list screen displays pieces of display information of a plurality of contents. In the related content list screen are arranged key content and other contents highly related to the key content.

Further, the operation receiver 101 receives an item selection operation and a display switch operation from the related content list screen (see FIG. 16) displayed on the display module 170.

Still further, the operation receiver 101 receives an operation to switch categories to be displayed. The operation may be performed in any manner. It is assumed herein that, for example, when the green key 211c is pressed on the remote controller 90, the operation receiver 101 receives an operation to switch the category, and the categories are switched from one to another. That is, each time the green key 211c is pressed, displayed contents are switched among contents currently being broadcasted and to be broadcasted, auto-recorded contents, and PVR contents.

Still further, the operation receiver 101 receives an operation to select key content from use history stored in the history information storage module 140. The use history indicates key contents in the order in which they are used. The operation using the history will be described in detail later.

The metadata acquiring module 103 acquires, when the operation receiver 101 receives an operation to select key content, metadata of all contents (the key content and other contents than the key content) belonging to a category to be displayed. More specifically, for example, the metadata acquiring module 103 acquires the metadata of the contents from the recorded program storage module 160.

When the condition of contents to be displayed is set on the search range setting screen illustrated in FIG. 8B, the metadata acquiring module 103 acquires metadata of only contents that satisfy the condition. With this, the display controller 106 displays a related content list screen in which are arranged only icons of contents that satisfy the condition set through the operation receiver 101.

The metadata acquiring module 103 may also acquire the metadata of the contents from the EPG stored in the EPG storage module 150.

When the operation receiver 101 receives an operation to select key content, the metadata acquiring module 103 stores the metadata of the key content in the history information storage module 140.

The metadata retriever 102 retrieves, when the operation receiver 101 receives an operation to select key content, metadata of the key content from the metadata of the contents acquired by the metadata acquiring module 103. The metadata retriever 102 then outputs the metadata of the key content to the relation calculator 104. The metadata retriever 102 also retrieves, based on the metadata of the key content acquired from the metadata acquiring module 103, metadata of other contents to be the objects of calculation by the relation calculator 104 as to the relation to the key content. The metadata retriever 102 then outputs the metadata of the other contents to the relation calculator 104.

The metadata retriever 102 also outputs, when the operation receiver 101 receives an operation to select key content, the metadata of all the contents acquired by the metadata acquiring module 103 to the display information generator 105.

The relation calculator 104 calculates the relation of each of the other contents to the key content based on the metadata of the key content and the metadata of the other contents received from the metadata retriever 102 for each item. Examples of the item include title and channel. More specifically, the relation calculator 104 calculates relation RM using the following Equation 1:

$$RM = A\sum_{n=1}^{N} fa_n(M11(n), M21(n)) \times wa_n \qquad (1)$$

where N represents the total number of metadata items acquirable by the metadata acquiring module 103, M11 represents the metadata of the key content, M21 represents the metadata of any of the other contents, and (n) represents n-th metadata acquired by the metadata acquiring module 103. Further, $fa_n(M11(n), M21(n))$ is a function that returns the relation between the metadata M11(n) and M21(n) as $RM_n$, and $Wa_n$ is a value (n = 1, ..., N) indicating weight.

As described above, although various types of information is acquired as the metadata, the metadata will be described below as a set of five items (N = 5), i.e., recoding date and time, title of content, channel, genre, and cast, for simplicity. The five items of the metadata will be described as n = 1, 2, ..., 5 in the above order.

The relation RM of the other contents with respect to the key content can be represented by the weighted linear sum of the following five relations $RM_1$ to $RM_5$:

$RM_1 = fa_1$ (recoding date and time of metadata M11, recoding date and time of metadata M21)
$RM_2 = fa_2$ (title of metadata M11, title of metadata M21)
$RM_3 = fa_3$ (channel of metadata M11, channel of metadata M21)
$RM_4 = fa_4$ (genre of metadata M11, genre of metadata M21)
$RM_5 = fa_5$ (cast of metadata M11, cast of metadata M21)

For example, $fa_1$ is a function that is larger for a smaller difference in recoding date and time between the metadata M11 and M21 and is smaller for a larger difference in the recoding date and time. More specifically, $fa_1$ may be represented by using a relational expression as follows:

$$MO1/|rec_data\ (M11) - rec_data\ (M21)|$$

where rec_data (x) is a function that uniquely converts the recoding date and time of x into an integer, MO1 is an arbitrary constant number, and |X| is a function indicating the size of X and is typically an absolute value. Specifically, rec_data (x) is a function that converts the recoding date and time into an integer such as seconds having elapsed from a reference date and time determined as 0.

While an example is described above in which a function g represented as g(x) = MO1/|X| is applied to $fa_1$ (M11, M21) = g(rec_data (M11) - rec_data (M21)), it is not so limited. The function g may be a function with L2 norm as, for example, $g(x) = MO1/\|x\|$. In this case, $\|x\|$ is the square root of the sum of squares of the differences between elements that constitute x.

Other functions such as a sigmoid function and a gamma function may be applied to g(x). Besides, while an example is described above in which the function is larger as the recoding dates and times of the metadata M11 and M21 are closer, it is not so limited. The function may be smaller as the recoding dates and times of the metadata M11 and M21 are closer. Further, the function g may be large when a specific condition is satisfied.

For example, $fa_2$ is a function that is larger as more of the same letters or characters are contained in the character strings of the titles of the respective metadata M11 and M21. More specifically, if the title of the metadata M11 is "ABCDE" and that of the metadata M11 is "FGCDH", the two same letters "CD" are contained in both the titles. If the title of the metadata M11 is "ABCDE" and that of the metadata M11 is "FGHIE", the one same letter is contained in both the titles. Therefore, the value of $fa_2$ is larger in the former case. The relation may be determined based on a keyword contained in the brief description (subtitle) of a program in the same manner as the title basis.

While an example is cited above in which the number of the same letters or characters contained in both the titles are simply compared, this is not intended as a limitation. Additional conditions may be used such as that the function is larger as more of the same letters or characters are contained in both the titles from the top, or that even if no same letter is present in both the titles, when the titles have a common idea, they are determined to be the same. As an example of the latter case, a Japanese word "yakyu" is regarded as the same as "baseball", and the titles that contain the words "yakyu" and "baseball", respectively, are determined to contain the same character string.

Besides, when the titles have the same main character string and different sub character strings, they are likely to be of contents of the same series. Accordingly, in such a case, the value of $fa_2$ may be set to large. Specifically, for example, "ABCDE #2" and "ABCDE #3" are likely to be the titles of different episodes of the same drama series. Therefore, in such a case, the value of $fa_2$ may be doubled. Note that the above is described by way of example only, and the comparison as described above may be accomplished with high accuracy by commonly known technologies such as approximate pattern matching and regular expression matching.

For example, $fa_3$ is a function that is large when the metadata M11 and M21 are of contents of the same channel. Simply, $fa_3$ may be a function that takes value MO2 when the metadata M11 and M21 are of contents of the same channel and otherwise takes value 0. The value M02 is an arbitrary constant number. In addition, if the metadata M11 and M21 are of contents of affiliate channels, the value of $fa_3$ may be set to a different value. For example, $fa_3$ may be a function that returns value M03 when the metadata M11 and M21 are of contents of affiliate channels. Further, $fa_3$ may be a function that returns value MO2/4 if the metadata M11 and M21 are of contents of affiliate channels but of different broadcast media. Note that the above is described by way of example only, and $fa_3$ may be an arbitrary function.

For example, $fa_4$ is a function that is large when the metadata M11 and M21 are of contents of the same genre. More specifically, $fa_4$ may be a function that takes value MO3 if the metadata M11 and M21 both belong to the same genre "sports" and otherwise takes value 0. In addition, if the metadata M21 belongs to the subgenre of the metadata M11 such as, for example, if the metadata M11 belongs to the genre "sports" and the metadata M21 belongs to the genre "baseball", $fa_4$ may be a function that takes value MO3/2. Further, even if the metadata M11 and M21 do not directly belong to the same genre, when they can be categorized in the same genre such as, for example, when the metadata M11 belongs to the genre "baseball" while the metadata M21 belongs to the genre "football" and the both are categorized in sports, $fa_4$ may be a function that takes value MO3/4. Note that the above is described by way of example only, and $fa_4$ may be an arbitrary function.

For example, $fa_5$ is a similar function to $fa_4$. More specifically, if the metadata M11 is of the content featuring "WW, XX, YY" and the metadata M21 is of the content featuring "XX, YY, ZZ", then the same two persons are casted for both the contents. In such a case, $fa_5$ may be a function that takes value $2\times$MO4 (MO4: an arbitrary constant number), and it may be a function that takes value 0 if there is no same person casted for both the contents. Besides, the cast may include a group or a member of a group. For example, if a person KK is a member of a group XX, and when the metadata M11 is of the content featuring "VV, WW, XX" and the metadata M21 is of the content featuring "KK, YY, ZZ", the person KK is casted in the content of M11 as a member of the group XX and also is casted in the content of M21. In such a case, $fa_5$ may be a function that returns value MO4/2.

In a similar fashion, the relation between groups or between people featured in the contents may be defined. For example, when the groups XX and YY belong to the same office, $fa_5$ may be a function that returns value MO4/4. In this case, the relation between a person and a group or between offices to which a person and a group belong may be defined in the metadata or may be obtained from an external server (information site).

While an example is described above in which the relation is calculated not differentiating people in the cast list, this is not so limited. The relation may further be weighted according to the order on the cast list. For example, the derived relation is left as it is with respect to the first person on the cast list for the metadata M11, while it is weighted by 1/2 with respect to the second person and similarly is weighted by 1/3 with respect to the third person. The order on the cast list for the metadata M21 may also be taken into account in addition to that for the metadata M11. For example, if the second person on the cast list for the metadata M11 is the third person on the cast list for the metadata M21, the relation may be weighted by 1/2 with respect to the second person for the metadata M11 and may further be weighted by 1/3 with respect to the third person for the metadata M21. That is, the relation may be weighted by 1/2x1/3 = 1/6. Besides, the relation may be weighted differently with respect to a star playing a leading role based on information on the cast or the like. For example, the derived relation may be double-weighted with respect to the star.

The display information generator 105 generates display information representing the details of the key content and the other contents based on the metadata of the key content and that of the other contents output from the metadata retriever 102.

More specifically, for example, based on the metadata of content of video data stored in the recorded program storage module 160, the display information generator 105 adds such items as a title to the representative image of the video data to generate display information to be displayed on the display module 170. Further, for example, based on the EPG stored in the EPG storage module 150, the display information generator 105 generates display information to be displayed on the display module 170 to indicate the title of a TV program, the broadcast date and time, the channel, the brief description (subtitle) of the TV program, and the like.

The display information will be described in detail below. FIGS. 9A and 9B illustrate examples of the display information representing the details of content. FIG. 9A illustrates display information C1 of key content generated based on, for example, the metadata of video data stored in the recorded program storage module 160. As illustrated in FIG. 9A, the display information C1 includes a representative image C1-1 of the content and title C1-2 of the content (video) "L358∆*6".

On the other hand, FIG. 9B illustrates the display information C1 of the key content generated based on, for example, an EPG. As illustrated in FIG. 9B, the display information C1 includes the channel C1-3, title "Lunchtime Comedy Show" with subtitle "Great line up of comedians invite you to enjoy a noon of hilarious entertainment" C1-4 of the content (video), and broadcast date and time C1-5.

The display controller 106 displays content output from the video reproducer 107 on the display module 170. As described above, when the operation receiver 101 receives an instruction from the user to search for content, the display controller 106 displays related content list information indicating a list of display information of key content and that of other contents related to the key content on the display module 170 to allow the user to search for the content.

In the related content list information, the display information of the key content is arranged in a desired position. Further, items selected through the remote controller 90 are arranged close to the display information of the key content, for example, correspondingly to the directions of operation on an operation button such as an arrow key on the input device such as the remote controller 90. In addition, with the position of the display information of the key content as the center, pieces of the display information of the other contents are arranged to form concentric polygons, for example, correspondingly to the directions of operation on an operation button such as the arrow key on the input device such as the remote controller 90 with respect to the items. The screen is divided into predetermined areas for the respective items in radial directions from the center. The pieces of the display information of the other contents are arranged in the predetermined areas such that the one with higher relation to the key content as to a corresponding item is closer to the center. Besides, in the related content list information, the display information of the key content is displayed in the largest size, and the display information of the other contents is displayed smaller as the distance from the center increases. With reference to FIGS. 10A to 16, a description will be given of the operation of arranging and displaying the display information in the related content list information. FIGS. 10A to 16 are schematic diagrams for explaining the related content list information.

As illustrated in FIG. 10A, the display controller 106 arranges display information C1 of key content at a desired position. The display controller 106 then sets, using the position of the display information C1 as the center, four axes (axes 1 to 4) in the positive x-axis direction, the positive y-axis direction, the negative x-axis direction, and the negative y-axis direction, respectively, correspondingly to directions that can be instructed through the input device. Thereafter, the display controller 106 arranges each item at a position close to the display information C1 on one of the four axes extending in a direction of a direction instruction provided through the input device. That is, the number of the axes and the items corresponds to the directions (four directions) that can be specified by an operation button (arrow key) provided on the input device such as the remote controller 90 to instruct the direction. If the input device such as the remote controller 90 is provided with an arrow key or arrow keys capable of specifying eight directions, i.e., up, down, left, right, upper right, lower right, upper left, and lower left, up to eight axes can be set.

As illustrated in FIG. 10B, the display controller 106 divides the display area into predetermined areas (areas 1 to 4) in radial directions from the display information C1 in the center. The display area is divided at an arbitrary angle, for example, an angle of 90°, such that each of the predetermined areas includes one of the axes assigned one of the items. In this manner, the display controller 106 generates the predetermined areas (area 1 to 4) each including one of the axes.

As illustrated in FIG. 11, the display controller 106 arranges pieces of display information of other contents on a plurality of octagons F1, F2, ..., which are concentrically formed around the display information C1 of the key content as the center, correspondingly to up, down, left, and right directions of the operation button on the remote controller 90. More specifically, the display controller 106 arranges eight pieces of display information C11 to C18 of other contents on the corners of the octagon F1. Further, the display controller 106 arranges on the corners of the octagon F2 eight pieces of display information C21, C23, C25, C27, C29, C31, C33, and C35 of other contents, and also eight pieces of display information C22, C24, C26, C28, C30, C32, C34, and C36 of other contents between the respective pieces along the directions of operation. In the same manner as just described, the display controller 106 arranges on the corners of each octagon eight pieces of display information of other contents, and also eight pieces of display information of other contents between the respective pieces. With this arrangement of display information of other contents, with respect to any piece of display information, other pieces of display information are arranged along the up, down, left, or right directions of operation.

At this time, as illustrated in FIG. 12, the display controller 106 arranges pieces of display information of other contents with higher relation to the key content closer to the center at which is arranged the display information C1 of the key content. In other words, in the example of FIG. 11, the display controller 106 arranges pieces of display information of other contents with the highest relation to the key content on the octagon F1. The display controller 106 also arranges pieces of display information of other contents in descending order of relation to the key content on the octagon F2, and other octagons (not illustrated).

In addition, the display controller 106 arranges pieces of display information of other contents in descending order of relation to the key content in each of the display areas (areas 1 to 4) corresponding to each of the items (items K1 to K4). More specifically, as illustrated in FIG. 13, the display controller 106 assigns the area 1 defined by boundary lines B1 and B4 to the item K1, the area 2 defined by boundary lines B1 and B2 to the item K2, the area 3 defined by boundary lines B2 and B3 to the item K3, and the area 4 defined by boundary lines B3 and B4 to the item K4. The display controller 106 arranges pieces of display information of other contents in the order of numbers assigned to the pieces illustrated in FIG. 13. Thus, with respect to each of the items, the pieces of the display information of the other contents can be arranged in each area from around the center in descending order of relation to the key content.

When display information of another content than the key content belongs to a plurality of areas, the display controller 106 displays the display information in one of the areas. More specifically, when display information of the other content belongs to the areas 1 and 2, the display controller 106 displays the display information in only one area assigned an item with respect to which the other content has higher relation to the key content.

In the example of FIG. 13, pieces of the display information C11, C21 and C41 are located in positions capable of belonging to both the areas 1 and 2. For example, the pieces of the display information C11, C21 and C41 may be set to belong to either one of the areas or items in which more contents with relation to the key content higher than a predetermined threshold are present than in the other. In FIG. 13, since more other contents with relation higher than the predetermined threshold are present in the area 2 assigned the item 2 than in the area 1 assigned the item 1, the pieces of the display information C11, C21 and C41 belong to the area 2. The same is applied to pieces of the display information C13, C25, C47, C15, C29, C53, C17, C33, and C59.

While an area to which display information displayed near a boundary line belongs is described above as being determined based on the degree of relation to the key content, this is by way of example and not of limitation. For example, display information displayed near a boundary line may belong to an area having more contents related to the key content than the other.

Further, as illustrated in FIG. 14, the display controller 106 displays the display information of the key content in the largest size, and the display information of the other contents smaller as the distance from the center increases. Incidentally, the display controller 106 stores in advance the display position and size of the display information, and, after the calculation of the relation to the key content, sequentially arranges pieces of the display information of the other contents each in a predetermined size.

In this manner, the display controller 106 generates related content list information in which are arranged the display information C1 of the key content and the display information C11, ... of the other contents, and displays the related content list information on the display module 170. FIG. 15 illustrates an example of the related content list information in which are arranged the display information C1 of the key content and the display information C11, ... of the other contents. In the related content list information of FIG. 15, the items K1 to K4 are displayed at positions close to the display information C1 of the key content. In the example of FIG. 15, "Cast", "Title", "Genre" and "Keyword" are selected as the items K1 to K4, respectively. With the display information C1 of the key content as the center, pieces of the display information of the other contents are arranged from around the center toward the outside.

As described above, according to the embodiment, pieces of display information of other contents than key content are arranged along up, down, left, and right directions of operation. Therefore, in the example of FIG. 15, if the display information C30 is focused content for search, upon receipt of an instruction for left-right movement through the operation button on the remote controller 90 or the keyboard, the focus on the display information C30 moves in directions indicated by a double-luead arrow A. Similarly, if the display information C30 is focused content for search, upon receipt of an instruction for up-down movement through the operation button on the remote controller 90 or the keyboard, the focus on the display information C30 moves in directions indicated by a double-head arrow B. Additionally, for example, if the cursor moves one space to the right in response to an instruction when the focus is on the display information C11, the focus moves to the display information C36. Similarly, if the cursor moves one space in the up, left, or down direction in response to an instruction, the focus moves from the display information C11 to the display information C22, C12, or C18. Thus, the operation using the operation button such as an arrow key on the remote controller 90 or the keyboard can be facilitated.

With reference to FIG. 16, a description will be given of the operation of selecting an item. As described above, axes and items are provided in the number specifiable by the arrow key on the input device, and the items K1 to K4 are arranged close to the display information C1 of the key content each on one of the axes. When the cursor is placed on the position of the display information C1 and the arrow key is manipulated upward once on the input device, the cursor moves to the display information C12 through the item K2 "title" arranged above the display information C1 of the key content. That is, by manipulating the arrow key on the input device, the user can move the cursor from the display information C1 of the key content to that of another content.

Meanwhile, when the cursor is placed on the display information C12 and the arrow key is manipulated downward on the input device, the cursor moves to the display information C1 of the key content. This enables the operation related to the display information C1.

With an operation key such as the arrow key, the user can select content belonging to each item assigned to each axis. Incidentally, the user may set an item assigned to each axis. In the embodiment, while "Title", "Cenre", "Cast", and "Keyword" are cited as examples of the items, broadcast station, broadcast date and time, and the like may be set as items. The user is allowed to arrange desired items at desired locations so that he/she can easily view them and perform operation. Thus, it is possible to increase the convenience for the user.

With reference to FIG. 17, a description will be given of screen transition when content is selected on a program guide or a related content list screen. First, the display controller 106 displays a program guide screen 1701 on the display module 170. The program guide screen 1701 may indicate programs currently being broadcasted, those to be broadcasted, or those having already been broadcasted. It is assumed that the operation receiver 101 receives the selection of one content from the program guide screen 1701. After that, it is assumed that the user presses the green key 211c corresponding to program search and selects the related program list 801b on the screen illustrated in FIG. 8A, and that a search range is set on the search range setting screen illustrated in FIG. 8B.

In this case, as can be seen in a screen 1702, display information 1712 of selected content is displayed. Thereafter, the program guide, background, and the like are deleted. Then, as can be seen in a screen 1703, only display information 1713 of the content as key content is displayed with the background color black. Thus, the display information 1713 of the key content constitutes a reference for rearrangement.

Next, as can be seen in a screen 1704, the display controller 106 displays the display information of the key content at the center, and then displays the animation of pieces of display information of other contents related to the key content. In the animation display, the pieces of the display information of the other contents each move from the outermost periphery of the display area to a display position specified based on the relation to the key content. Thus, as can be seen in a screen 1705, the display controller 106 displays list information in which display information of content with higher relation to the key content is arranged closer to the display information of the key content.

After that, as can be seen in a screen 1706, the display controller 106 displays the related content list screen. In response to the operation to move the cursor received by the operation receiver 101, the display controller 106 moves a focus 1714. When the operation receiver 101 receives the selection of display information of content other than the key content, as can be seen in a screen 1707, the display controller 106 deletes the display information of the other contents while leaving only display information 1715 of the selected content.

Then, as can be seen in the screen 1703, the display controller 106 displays only the display information 1713 of the content as next key content with the background color black. After displaying the screen 1704 of the animation display, in which pieces of display information of other contents each move to a display position, as can be seen in the screen 1705, the display controller 106 displays list information in which the display information of the selected content is arranged at the center and display information of contents related to the selected content is arranged around it.

Thereafter, the screen transits from the screen 1706 to 1705 based on a selection operation by the user. In the screen transition described above, while display information of key content remains, the display of display information of other contents is terminated. Thus, the user can easily recognize the key content. Further, the display information of the key content is arranged at the center, and pieces of display information of other contents are arranged around the display information of the key content. Accordingly, the user can easily recognize the relation between the key content and the other contents. This facilitates the search by the user for desired content.

Regardless of categories, i.e., contents currently being broadcasted and to be broadcasted, auto-recorded contents, and PVR contents, the screen transits in the same manner as the related content list screen illustrated in FIG. 17. Therefore, the description will not be repeated for each of the categories. Besides, when the categories are switched from one to another, the screen transits in the same manner as described above based on the same key content. Further, when key content is changed based on use history stored in the history information storage module 140, the screen transits in the same manner as described above.

In the related content list screen, if the operation receiver 101 receives an operation to display a menu while focus is placed on display information of key content or another content, the display controller 106 displays a menu containing options available for the key content or the other content. FIG. 18 is a schematic diagram of the menu that displays options for content on the related content list screen in which are arranged pieces of display information of auto-recorded contents.

As illustrated in FIG. 18, when a menu is displayed while focus is placed on display information of auto-recorded content, the menu contains options such as "Play", "Keep", and "Record Weekly". When the user selects "Play" from the options, the auto-recorded content is reproduced for view. When the user selects "Keep", the auto-recorded content is stored as PVR content. When the user selects "Record Weekly", the auto-recorded content is recorded at the same time every week. In this manner, the menu provides options with respect to the auto-recorded content.

The options displayed on the menu vary depending on the category to which focused content belongs. FIG. 19 is a list of examples of options displayed with respect to each of the content categories. As illustrated in FIG. 19, if the menu is displayed while focus is placed on display information of content currently being broadcasted (current content), it contains options such as "Play", "Record", and "Record Weekly". If the menu is displayed while focus is placed on display information of content to be broadcasted (future content), it contains options such as "Timer Play", "Timer Record", and "Record Weekly". Meanwhile, if the menu is displayed while focus is placed on display information of PVR content, it contains an option such as "Resume Play". In this manner, appropriate options are displayed depending on the category, which increases the operability.

In the following, a description will be given of the screen transition when the user presses the green key 211c corresponding to a "category switch" 1603 on the related content list screen illustrated in FIG. 16. FIG. 20 is a schematic diagram for explaining the transition of the related content list screen when the categories are switched from one to another. As illustrated in FIG. 20, each time the green key 211c is pressed, the operation receiver 101 receives the operation as an instruction to switch the category. After the metadata retriever 102 retrieves metadata of contents again, the display controller 106 displays the related content list screen corresponding to the switched category. Even when the categories are switched from one to another, as can be seen from FIG. 20, key content selected by the user does not change. The key content is used to calculate the relation to other contents.

For example, when the operation receiver 101 receives the selection of key content from contents currently being broadcasted and to be broadcasted displayed on the related content list screen indicated by (a) in FIG. 20, and when the operation receiver 101 receives an instruction to switch the category by the depression of the green key 211c, the relation calculator 104 calculates the relation between key content, which is content currently being broadcasted or to be broadcasted, and auto-recorded contents belonging to the switched category. According to the calculation result, the display controller 106 displays the related content list screen as indicated by (b) in FIG. 20, in which pieces of display information of auto-recorded contents as other contents are arranged around display information of the key content, i.e., content currently being broadcasted or to be broadcasted, at the center.

After that, if the operation receiver 101 receives again an instruction to switch the category by the depression of the green key 211c, the relation calculator 104 calculates the relation between the key content, which is content currently being broadcasted or to be broadcasted, and PVR contents belonging to the switched category. According to the calculation result, the display controller 106 displays the related content list screen as indicated by (c) in FIG. 20, in which pieces of display information of PVR contents as other contents are arranged around the display information of the key content, i.e., content currently being broadcasted or to be broadcasted, at the center.

In the related content list screen as indicated by (b) in FIG. 20, if the operation receiver 101 receives again an instruction to switch the category by the depression of the green key 211c after focus is placed on display information of auto-recorded content, the subsequent process is performed using the focused auto-recorded content as key content.

Each time the operation receiver 101 receives an instruction to switch the category, the metadata acquiring module 103 acquires metadata, and the relation calculator 104 calculates the relation. With this, even if information stored in the EPG storage module 150 and the recorded program storage module 160 changes along with a change in content currently being broadcasted or the like as the time elapses, the related content list screen is displayed based on the changed information. For example, if broadcast of content has just been finished, the content is not displayed on the related content list screen for contents currently being broadcasted and to be broadcasted. Instead, the content is displayed on the related content list screen for auto-recorded contents. This allows the user to obtain appropriate information on contents according to the lapse of time.

A description will then be given of the screen transition between a program guide and a related content list screen. FIG. 21 is a schematic diagram for explaining the screen transition between a program guide and a related content list screen. As illustrated in FIG. 21, in the case of the transition from a program guide 2101, the display controller 106 displays a related content list screen 2102 for contents (programs) currently being broadcasted and to be broadcasted. In the case of the transition from a past program guide 2103, the display controller 106 displays a related content list screen 2104 for contents (programs) having already been broadcasted. In the case of the transition from a PVR content list 2105, the display controller 106 displays a related content list screen 2106 for PVR contents. In this manner, upon receipt of an operation to display the related content list screen, the display controller 106 displays the related content list screen of the same category as a screen before the transition.

The screen transits among the related content list screens 2102, 2104, and 2106 in the same manner as previously described in connection with FIG. 20. When the operation receiver 101 receives the selection of content on one of the related content list screens 2102, 2104, and 2106, the content is reproduced for view, stored, programmed to be recorded, or the like. The operation performed for each content is basically the same as the options illustrated in FIG. 19, and the description will not be repeated.

Referring back to FIG. 1, the history information storage module 140 stores metadata of contents used as key content on the related content list screen and the order in which the user selects the contents (uses the contents for search). FIG. 22 is a schematic diagram of a table structure of the history information storage module 140. As illustrated in FIG. 22, the history information storage module 140 stores such items as order, program information, broadcast station, broadcast date and time, broadcast period, file name of a thumbnail image used as display information in association with one another. The program information includes metadata of content representing a program.

When the operation receiver 101 receives the selection of content as key content, through the processing performed by the metadata acquiring module 103, the metadata and order of the content are added to the history information storage module 140. Even when metadata is deleted from the EPG storage module 150 or content is deleted from the recorded program storage module 160, the history information storage module 140 of the embodiment retains corresponding metadata without deleting it. With this, it is possible to retain metadata of content once used as key content, which increases the convenience and operability upon search.

The history information storage module 140 may be comprised of a nonvolatile storage medium such as a flash read only memory (ROM) and, even when the digital TV display device 100 is shut down or restarted, keeps metadata of key content previously used. Thus, when restarting the digital TV display device 100, the user can operate it based on history information used the previous time.

A description will be given of the operation using the history information storage module 140. It is assumed that the related content list screen as illustrated in FIG. 16 is displayed. The related content list screen is based on key content (display information) 1605 and displays pieces of display information of other contents rerated to the key content 1605. The user can display a related content list screen based on key content selected before the key content 1605 by just pressing the red key 211b corresponding to "Back" 1602.

When the operation receiver 101 receives an operation related to the history in response to the depression of the red key 211b, the metadata acquiring module 103 acquires metadata of key content immediately previous to the key content 1605 currently displayed on the related content list screen from the history information storage module 140. The metadata acquiring module 103 also acquires metadata of contents belonging to the category currently selected on the related content list screen from the EPG storage module 150. The relation calculator 104 calculates the relation between the previous key content and the other contents. The display controller 106 then displays a related content list screen in which, with display information of the previous key content at the center, pieces of display information of the other contents are arranged around display information of the previous key content based on the relation to the previous key content.

The screen transits in the same manner as illustrated in FIG. 20. That is, after switching of key content displayed at the center from one to another, pieces of display information of other contents, which have been displayed, are deleted. After that, pieces of display information of other contents move from outside the display area and are newly arranged around the key content. Thus, the related content list screen changes.

In this manner, each time the user presses the red key 211b corresponding to the "Back" 1602, a related content list screen is displayed that is based on key content immediately previous to current key content. Besides, when the user presses the blue key 211a corresponding to the "Forward" 1601 while the related content list screen is displayed that is based on the previous key content, a related content list screen is displayed that is based on the key content immediately subsequent to the previous (current) key content. This process is performed in the same manner as previously described for the process of displaying a related content list screen based on key content immediately previous to current key content. An icon displayed together with display information of the key content allows the user to check whether key content can be switched according to the history.

FIGS. 23A to 23C are schematic diagrams for explaining the transition of the icon displayed together with display information of key content on the related content list screen. If an icon 2301 as illustrated in FIG. 23A is displayed together with display information of key content on the related content list screen, it means that a related content list screen can be displayed based on key content used the previous time by pressing the red key 211b corresponding to "Back".

That is, the icon 2301 provides operation availability information indicating that key content used immediately previous to current key content can be selected from the history information storage module 140.

FIG. 23B illustrates icons displayed together with the display information of the key content on the related content list screen based on the previous key content. As can be seen from FIG. 23B, in addition to the icon 2301 illustrated in FIG. 23A, an icon 2302 is newly displayed. The icon 2302 indicates that the related content list screen can be displayed based on the key content used immediately subsequent to the previous (current) key content by pressing the blue key 211a corresponding to the "Forward".

If the user presses again the red key 211b corresponding to "Back", as illustrated in FIG. 23C, the display controller 106 displays an icon 2303 as well as the icon 2302 together with the display information of the key content.

The icon 2303 indicates that, even if the red key 211b corresponding to "Back" is pressed again, a related content list screen cannot be displayed based on further previous key content. In other words, the icon 2303 provides operation unavailability information indicating that key content used immediately previous to current key content cannot be selected from the history information storage module 140.

As illustrated in FIGS. 23A to 23C, the icons displayed together with display information of key content allow the user to check whether he/she can operate the digital TV display device 100 based on the operation history. This increase the convenience for the user.

FIG. 24 is a schematic diagram for explaining the transition of the related content list screen based on the operation history. As illustrated in FIG. 24, each time the operation receiver 101 receives the selection of content on a related content list screen (select 2401 to 2404), the display controller 106 displays a related content list screen using the selected content as key content. Through the processing performed by the metadata acquiring module 103, the metadata and order of the selected content are stored in the history information storage module 140. Besides, each time the operation receiver 101 receives an operation to track back the operation history (back 2405 to 2407), the display controller 106 displays a related content list screen based on previously used key content. The metadata acquiring module 103 acquires metadata of other contents each time a related content list screen is displayed. Thus, if the EPG storage module 150 and the recorded program storage module 160 are updated, display information of different contents is displayed on the related content list screen.

After display of the related content list screen based on the previously used key content, if the operation receiver 101 receives the selection of another content as key content (select 2408) , the display controller 106 displays a related content list screen based on metadata of the key content. After that, the user can display a related content list screen based on previous key content but not a related content list screen based on subsequent key content. Each time the operation receiver 101 receives the selection of content (select 2409 to 2410), the display controller 106 displays a related content list screen using the selected content as key content.

Even when the categories are switched from one to another, a related content list screen can be displayed based on key content stored in the history information storage module 140. FIG. 25 is a schematic diagram for explaining the transition of the related content list screen based on category switch and the operation history.

As illustrated in FIG. 25, each time the operation receiver 101 receives the selection of content on a related content list screen (select 2501 to 2504) , the display controller 106 displays a related content list screen using the selected content as key content. The metadata and order of the content selected as key content are stored in the history information storage module 140. Thus, when the operation receiver 101 receives an operation to track back the operation history (back 2505) , the display controller 106 displays a related content list screen based on the metadata of the key content stored in the history information storage module 140.

Even after the transition of the related content list screen based on the operation history, the operation receiver 101 can receive an operation to switch the category (category switch 2506). Upon receipt of the operation for the category switch 2506, the display controller 106 displays a related content list screen 2551 based on the same key content as used before the category switch.

Even when the category is switched, the history information storage module 140 retains information related to key content stored therein. Each time the operation receiver 101 receives an operation related to the operation history (forward 2507 and 2509, and back 2508 and 2510), the display controller 106 displays a related content list screen based on the same key content as has been used before. Accordingly, the related content list screen after category switch displays display information of the same key content as before the category switch and pieces of display information of other contents different from those before the category switch around the key content. Thus, even after an operation is performed related to the operation history, a related content list screen can be displayed based on metadata of the same key content belonging to different categories.

Further, the digital TV display device 100 of the embodiment is capable of operation using the history information storage module 140 except for the tracking back and forth of the operation history. For example, when the user presses the yellow key 211d corresponding to a "history list" 1604 on the related content list screen illustrated in FIG. 16, the operation receiver 101 receives the operation as an instruction to display a history list for reference. Thus, a key content history list is displayed. FIG. 26 illustrates an example of the key content history list displayed by the display controller 106. As illustrated in FIG. 26, when the operation receiver 101 receives an operation to display a key content history list for reference, the metadata acquiring module 103 reads metadata of all key contents stored in the history information storage module 140. After that, the display information generator 105 generates a key content history list based on the read metadata of the key contents, and the display controller 106 displays the key content history list.

While the key content history list illustrated in FIG. 26 indicates, for example, the title of each key content and the thumbnail, it may further indicate information contained in the metadata. Besides, while the key content history list is described above as indicating all the key contents stored in the history information storage module 140, it may indicate only a predetermined number of the latest key contents.

When the operation receiver 101 receives the selection of key content from the key content history list illustrated in FIG. 26, the display controller 106 displays a related content list screen based on the key content. As described above, according to the embodiment, the digital TV display device 100 is capable of displaying a related content list screen based on key content stored in the history information storage module 140 in various manners through various operations.

In the following, a description will be given of the operation of the digital TV display device 100 from display of a program guide to display of a related content list screen. FIG. 27 is a flowchart of the operation of the digital TV display device 100 from display of a program guide to display of a related content list screen.

First, in response to an operation received by the operation receiver 101, the display controller 106 displays a program guide (S2701). According to an operation on the remote controller 90, the operation receiver 101 places focus on a program (content) displayed on the program guide (S2702). The focused content is key content.

After that, if the operation receiver 101 receives the operation of pressing the green key 211c corresponding to program search, the display controller 106 displays the window 801 that selectably displays the search navigator 801a and the related program list 801b as illustrated in FIG. 8A (S2703). It is assumed herein that the operation receiver 101 receives the selection of the related program list 801b (S2704).

Thereafter, the metadata acquiring module 103 acquires metadata of all contents belonging to a category to be displayed (S2705). For example, if a program guide of contents currently being broadcasted and to be broadcasted is displayed at S2701, the metadata acquiring module 103 acquires metadata of all the contents currently being broadcasted and to be broadcasted. For another example, if a past program guide is displayed at S2701, the metadata acquiring module 103 acquires metadata of auto-recorded contents.

The metadata retriever 102 retrieves metadata of the key content from the metadata of the contents acquired by the metadata acquiring module 103 (S2706).

The relation calculator 104 calculates the relation of each of other contents to the key content based on the metadata of the key content and that of the other contents received from the metadata retriever 102 for each of items. The relation calculator 104 obtains the weighted linear sum of the relations for the items, thereby obtaining the relation of each content to the key content (S2707).

The display controller 106 generates related content list information in which display information of the key content and that of the other contents are arranged based on the relation of each of the other contents to the key content with respect to the items (S2708). The display controller 106 displays the related content list information on the display module 170 (S2709).

Then, it is determined whether the operation receiver 101 has received an operation to switch the current category to a new category by the depression of the green key 211c (S2710).

When the operation receiver 101 has received an operation to switch the current category to a new category (Yes at S2710), the metadata acquiring module 103 acquires metadata of all contents belonging to the new category (S2711). Incidentally, the key content is maintained to be the same as before the category switch. Accordingly, the metadata retriever 102 retains the metadata of the key content before the category switch. The category switch is performed in a manner as previously described.

The relation calculator 104 calculates the relation of each of other contents to the same key content based on the metadata of the key content and that of the other contents newly acquired by the metadata retriever 102 for each of the items. The relation calculator 104 obtains the weighted linear sum of the relations for the items, thereby obtaining the relation of each content to the key content (S2712).

The display controller 106 generates related content list information in which display information of the key content and that of the other contents are arranged based on the relation between each of the other contents belonging to the category and the key content with respect to the items (S2713). The display controller 106 displays the related content list information on the display module 170 (S2714).

When the operation receiver 101 has not received an operation to switch the category (No at S2710) or the process until S2714 is completed, it is determined that the operation receiver 101 has received the selection of content to be reproduced, recorded, or the like (S2715). If the operation receiver 101 has not received the selection of content (No at S2715), the process returns S2710.

On the other hand, if the operation receiver 101 has received the selection of content to be reproduced, recorded, or the like (Yes at S2715), the digital TV display device 100 reproduces, records, or the like the selected content (S2716).

With the process described above, if the categories are switched from one to another, the related content list screen can be displayed based on the same key content as before the category switch. In this manner, since operation related to key content history can be performed independently of category switch, a related content list screen for each category can be displayed using each key content stored in the history as a search key. Thus, it is possible to reduce the operational load to search for content desired by the user.

The contents that can be referred to with the digital TV display device 100 of the embodiment are not limited to those as described above, but may include, for example, digital versatile disk (DVD) video and video captured by a video camera. In addition, while contents are described above as being classified by category into those currently being broadcasted and to be broadcasted, auto-recorded contents, and PVR contents, it is not so limited. Contents may be classified on various bases.

As described above, according to the embodiment, when the categories are switched from one to another, display information of contents related to key content is displayed for each category. Thus, the user can easily specify desired content.

Each time the category is switched, the relation of contents to the key content is calculated based on newly acquired metadata. With this, display information of appropriate contents with high relation to key content is arranged in each area assigned an item according to the lapse of time. This facilitates the user to check a change in contents. That is, the user can check a change in search result at a glance.

Contents need not necessarily be classified into those currently being broadcasted, those having been broadcasted, PVR contents, and the like. Contents may be classified in any manner, for example, based on the play time of each contents.

According to the embodiment, the digital TV display device 100 allows the user to switch the category using a general key such as a color key on the remote controller 90, thereby facilitating the operation of the user. Thus, it is possible to reduce operation procedures required of the user to reduce the load and also possible to facilitate the search by narrowing down search objects.

According to the embodiment, the digital TV display device 100 allows the user to search for desired content from contents currently being broadcasted, those to be broadcasted, auto-recorded contents, and PVR contents in the same manner.

According to the embodiment, the digital TV display device 100 allows the user to switch the category using a general button commonly provided to remote controllers. Thus, it is possible to simplify the operation and make a quick switch of the category.

As described above, according to the embodiment, the digital TV display device 100 displays a related content list screen in which items are arranged close to display information of key content correspondingly to the directions of operation on the input device. Thus, the cursor can be easily moved from key content to each of the items, which facilitates the operation to switch the items from one to another. Moreover, the user can switch the items and move the cursor from display information of one content to another with a simple operation using, for example, only the allow key. Thus, the search operation is simplified.

Further, according to the embodiment, the digital TV display device 100 displays a related content list screen based on the same key content even after the category is switched. This allows the user to cross-reference to related content list screens for respective categories. Accordingly, the user can easily specify desired content from among numerous contents. By assigning the operation for the category switch to one button on the remote controller 90, the category can be easily switched. Pieces of display information of contents are provided with respect to each category, which limits the number of pieces of display information to be displayed. Thus, content can be easily selected with the remote controller 90.

Furthermore, according to the embodiment, the digital TV display device 100 displays a related content list screen containing display information of content as key content to allow the user to search for contents related to the key content. Since the history information storage module 140 stores metadata of each key content, the user can perform search again based on the key content history, which increases the operability.

The embodiment described above is susceptible to several modifications and variations. For example, in the above embodiment, an example is explained in which key content is maintained to be the same even after the category switch. However, if the operation receiver 101 receives an operation to switch the category, the display controller 106 may change key content according to the category. In this case, default key content is required with respect to each category. For example, among contents currently being broadcasted and to be broadcasted, content currently being broadcasted may be set as key content. Meanwhile, among auto-recorded contents and PVR contents, content that is reproduced highly frequently may be set as key content.

The computer program (hereinafter, "display processing program") may be executed on a computer to realize the same function as the digital TV display device 100. The display processing program may be provided to the computer as being stored in a computer-readable storage medium, such as a compact disc-read only memory (CD-ROM), a flexible disk (FD), a compact disc recordable (CD-R), and a digital versatile disc (DVD) , as a file in an installable or executable format.

The display processing program may also be stored in a computer connected via a network such as the Internet so that it can be downloaded therefrom via the network. The display processing program may also be provide or distributed via a network such as the Internet.

The display processing program may also be provided as being stored in advance in ROM or the like. The display processing program comprises modules that implement the above constituent elements (the operation receiver 101, the metadata retriever 102, the metadata acquiring module 103, the relation calculator 104, the display information generator 105, the display controller 106, the video reproducer 107, and the broadcast receiver 108). As real hardware, the CPU (processor) loads the display processing program from the storage medium as described above into the main memory and executes it. With this, the constituent elements, such as the operation receiver 101, the metadata retriever 102, the metadata acquiring module 103, the relation calculator 104, the display information generator 105, the display controller 106, the video reproducer 107, and the broadcast receiver 108, may be implemented on the main memory.

The various modules of the systems described herein can be implemented as software applications, hardware and/or software modules, or components on one or more computers, such as servers. While the various modules are illustrated separately, they may share some or all of the same underlying logic or code.

## Claims

1. A display processing method applied to a display processing apparatus, comprising:

   receiving (S2701) an operation to select key content as a reference of search for contents belonging to a first category, so as to search only the contents of this category;
   calculating (S2707) a relation between the selected key content and each of second contents belonging to the first category based on similarity of metadata of the key content and metadata of the second content of the first category;
   generating (S2708) a first displaying list screen in which pieces of display information of the second contents belonging to the first category are arranged around display information of the key content such that display information of second content is displayed based on the calculated similarity relation;
   displaying (S2709) the generated first displaying list screen;
   receiving (S2710) an operation to switch the first category to a second category;
   calculating (S2712), upon receipt of the operation to switch the category, a relation between the key content and each of third contents belonging to the second category based on similarity of the metadata of the key content and metadata of the third content of the second category;
   generating (S2713) a second displaying list screen in which pieces of the second display information of the third contents belonging to the second category are arranged around the first display information of the key content such that display information of third content is displayed based on the calculated similarity relation; and
   displaying (S2714) the second displaying list screen; wherein
   the key content belongs to the first category; and
   wherein a different displaying list screen with respect to each of the categories is generated; and
   wherein the first category classifies content by one of content currently being broadcast, content to be broadcast, auto-recorded content, and PVR content; and
   wherein the second category classifies content by other one of content currently being broadcast, content to be broadcast, auto-recorded content, and PVR content.

2. A display processing apparatus configured to perform the steps of the method of claim 1 and comprising;
   means for receiving (101) the operation to select key content as a reference of search for contents belonging to the first category, so as to search only the contents of this category, and for receiving the operation to switch the first category to the second category;
   means for calculating (104) the relation between the selected key content and each of second contents belonging to the first category or third contents belonging to the second category based on similarity of metadata of the key content and metadata of the second content of the first category or third content of the second category;
   means for generating (105) the first displaying list screen and the second displaying list screen; and
   means for displaying (195) the generated first or second displaying list screen.

## Patentansprüche

1. Anzeigeverarbeitungsverfahren angewendet auf eine Anzeigeverarbeitungsvorrichtung mit:

   Empfangen (S2701) eines Betriebs zum Auswählen von Schlüsselinhalt als ein Bezug zur Suche nach Inhalten, die zu einer ersten Kategorie gehören, um so nur die Inhalte dieser Kategorie zu suchen;
   Berechnen (S2707) einer Beziehung zwischen dem ausgewählten Schlüsselinhalt und jedem von zweiten Inhalten, die zu der ersten Kategorie gehören, beruhend auf der Ähnlichkeit von Metadaten des Schlüsselinhaltes und der Metadaten des zweiten Inhalts der ersten Kategorie;
   Erzeugen (S2708) eines ersten Anzeigenlisten-Schirms, in dem die Stücke von Anzeigeinformation der zweiten Inhalte, die zu der ersten Kategorie gehören, um die Anzeigeinformation des Schlüsselinhalts angeordnet werden, so dass Anzeigeinformation des zweiten Inhalts beruhend auf der berechneten Ähnlichkeitsbeziehung angezeigt wird;
Anzeigen (S2709) des erzeugten Anzeigenlisten-Schirms;
Empfangen (S2710) eines Betriebs zum Umschalten der ersten Kategorie auf eine zweite Kategorie;
Berechnen (S2712) beim Empfang des Betriebs zum Umschalten der Kategorie einer Beziehung zwischen dem Schlüsselinhalt und jedem von dritten Inhalten, die zu der zweiten Kategorie gehören, beruhend auf der Ähnlichkeit der Metadaten des Schlüsselinhalts und der Metadaten des dritten Inhalts der zweiten Kategorie;
Erzeugen (S2713) eines zweiten Anzeigenlisten-Schirms, in dem die Stücke der zweiten Anzeigeinformation der dritten Inhalte, die zu der zweiten Kategorie gehören, um die erste Anzeigeinformation des Schlüsselinhalts angeordnet werden, so dass Anzeigeinformation des dritten Inhalts beruhend auf der berechneten Ähnlichkeitsrelation angezeigt wird; und
Anzeigen (S2714) des zweiten Anzeigenlisten-Schirms; wobei
der Schlüsselinhalt zu der ersten Kategorie gehört; und
wobei ein unterschiedlicher Anzeigenlisten-Schirm in Bezug auf jede der Kategorien erzeugt wird; und
wobei die erste Kategorie den Inhalt in eins von: gegenwärtig gesendeter Inhalt, noch zu sendender Inhalt, selbst aufgezeichneter Inhalt und PVR-Inhalt klassifiziert; und
wobei die zweite Kategorie den Inhalt entsprechend einem anderen von gegenwärtig gesendeter Inhalt, noch zu sendender Inhalt, selbst aufgezeichneter Inhalt und PVR-Inhalt klassifiziert.

2. Anzeigeverarbeitungsvorrichtung, die ausgestaltet ist, um die Schritte des Verfahrens nach Anspruch 1 durchzuführen, und mit:

Mitteln zum Empfangen (101) des Betriebs zum Auswählen von Schlüsselinhalts als Bezug zur Suche für Inhalte, die zu der ersten Kategorie gehören, um so Inhalte dieser Kategorie zu suchen, und zum Empfangen des Betriebs zum Umschalten der ersten Kategorie auf die zweite Kategorie;
Mitteln zum Berechnen (104) der Beziehung zwischen dem ausgewählten Schlüsselinhalt und jedem der zweiten Inhalte, die zu der ersten Kategorie gehören, oder der dritten Inhalte, die zu der zweiten Kategorie, gehören, beruhend auf der Ähnlichkeit von Metadaten des Schlüsselinhalts und der Metadaten des zweiten Inhalts der ersten Kategorie oder des dritten Inhalts der zweiten Kategorie;
Mitteln zum Erzeugen (105) eines ersten Anzeigenlisten-Schirms und des zweiten Anzeigenlisten-Schirms; und
Mitteln zum Anzeigen (195) der erzeugten ersten und zweiten Anzeigenlisten-Schirme.

**Revendications**

1. Procédé de traitement d'affichage appliqué à un appareil de traitement d'affichage, comprenant :

la réception (S2701) d'une opération pour sélectionner un contenu de touche en tant que référence de recherche pour des contenus appartenant à une première catégorie, de manière à rechercher uniquement les contenus de cette catégorie ;
le calcul (S2707) d'une relation entre le contenu de touche sélectionné et chacun de deuxièmes contenus appartenant à la première catégorie sur la base d'une similarité entre les métadonnées du contenu de touche et les métadonnées du deuxième contenu de la première catégorie ;
la génération (S2708) d'un premier écran de liste d'affichage dans lequel des éléments d'informations d'affichage des deuxièmes contenus appartenant à la première catégorie sont agencés autour des informations d'affichage du contenu de touche de sorte que des informations d'affichage du deuxième contenu soient affichées sur la base de la relation de similarité calculée ;
l'affichage (S2709) du premier écran de liste d'affichage généré ;
la réception (S2710) d'une opération pour commuter de la première catégorie vers une deuxième catégorie ;
le calcul (S2712), lors de la réception de l'opération pour commuter la catégorie, d'une relation entre le contenu de touche et chacun de troisièmes contenus appartenant à la deuxième catégorie sur la base d'une similarité entre les métadonnées du contenu de touche et les métadonnées du troisième contenu de la deuxième catégorie ;
la génération (S2713) d'un deuxième écran de liste d'affichage dans lequel des éléments des deuxièmes informations d'affichage des troisièmes contenus appartenant à la deuxième catégorie sont agencés autour des premières informations d'affichage du contenu de touche de sorte que des informations d'affichage du troisième contenu soient affichées sur la base de la relation de similarité calculée ; et
l'affichage (S2714) du deuxième écran de liste d'affichage ; dans lequel

le contenu de touche appartient à la première catégorie ; et
dans lequel un écran de liste d'affichage différent en relation avec chacune des catégories est généré ; et
dans lequel la première catégorie classe le contenu en l'un d'un contenu actuellement diffusé, d'un contenu à diffuser, d'un contenu auto-enregistré et d'un contenu de PVR ; et
dans lequel la deuxième catégorie classe le contenu en un autre d'un contenu actuellement diffusé, d'un contenu à diffuser, d'un contenu auto-enregistré et d'un contenu de PVR.

**2.** Appareil de traitement d'affichage configuré pour exécuter les étapes du procédé selon la revendication 1 et comprenant :

des moyens pour recevoir (101) l'opération pour sélectionner un contenu de touche en tant que référence de recherche pour des contenus appartenant à la première catégorie, de manière à ne rechercher que les contenus de cette catégorie, et pour recevoir l'opération pour commuter de la première catégorie vers la deuxième catégorie ;
des moyens pour calculer (104) la relation entre le contenu de touche sélectionné et chacun de deuxièmes contenus appartenant à la première catégorie ou de troisièmes contenus appartenant à la deuxième catégorie sur la base d'une similarité entre les métadonnées du contenu de touche et les métadonnées du deuxième contenu de la première catégorie ou du troisième contenu de la deuxième catégorie ;
des moyens pour générer (105) le premier écran de liste d'affichage et le deuxième écran de liste d'affichage ; et
des moyens pour afficher (195) le premier ou le deuxième écran de liste d'affichage généré.

FIG.1

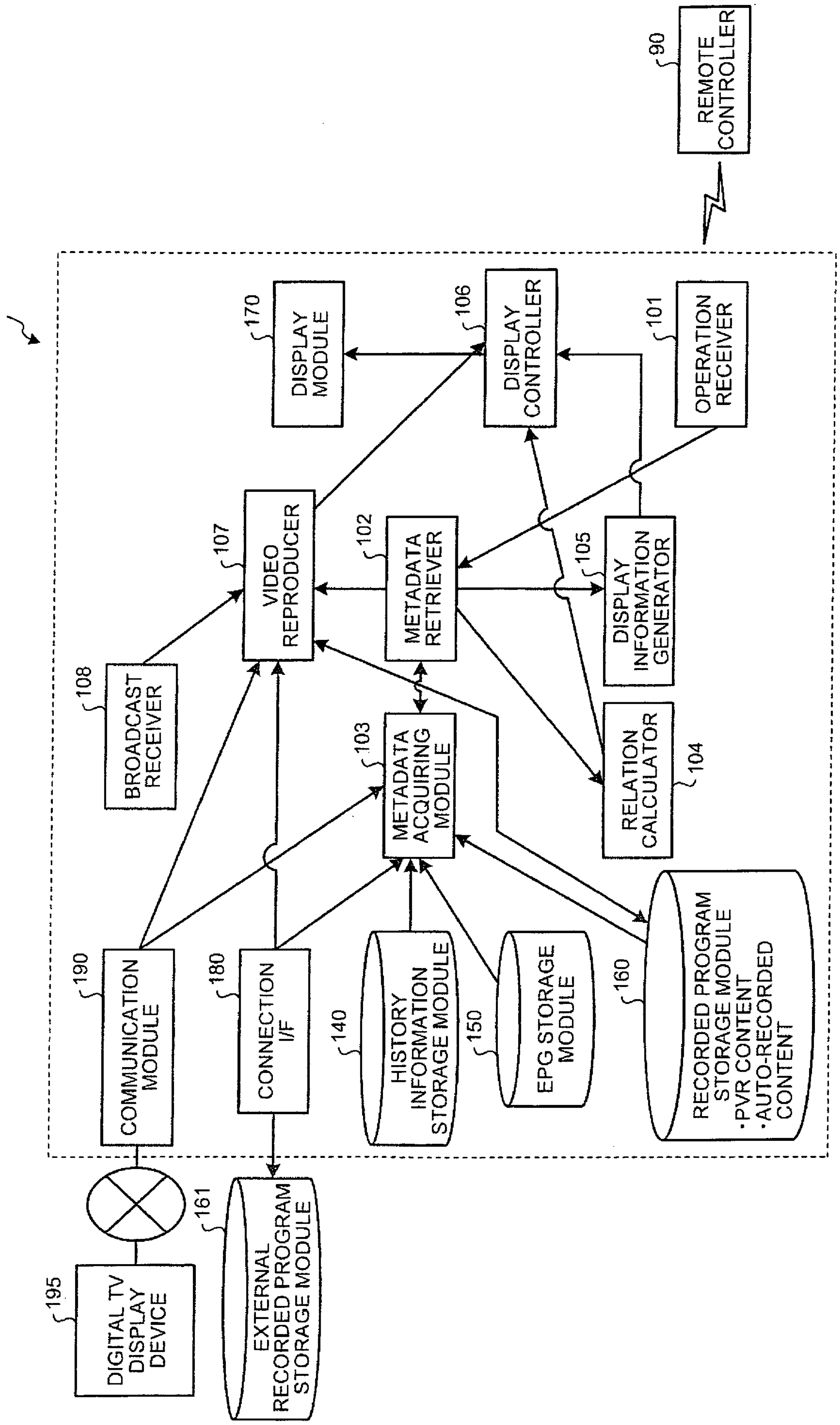
100
REMOTE CONTROLLER
90
DISPLAY MODULE
170
DISPLAY CONTROLLER
106
OPERATION RECEIVER
101
VIDEO REPRODUCER
107
METADATA RETRIEVER
102
DISPLAY INFORMATION GENERATOR
105
BROADCAST RECEIVER
108
METADATA ACQUIRING MODULE
103
RELATION CALCULATOR
104
COMMUNICATION MODULE
190
CONNECTION I/F
180
HISTORY INFORMATION STORAGE MODULE
140
EPG STORAGE MODULE
150
RECORDED PROGRAM STORAGE MODULE
·PVR CONTENT
·AUTO-RECORDED CONTENT
160
DIGITAL TV DISPLAY DEVICE
195
EXTERNAL RECORDED PROGRAM STORAGE MODULE
161

FIG.2

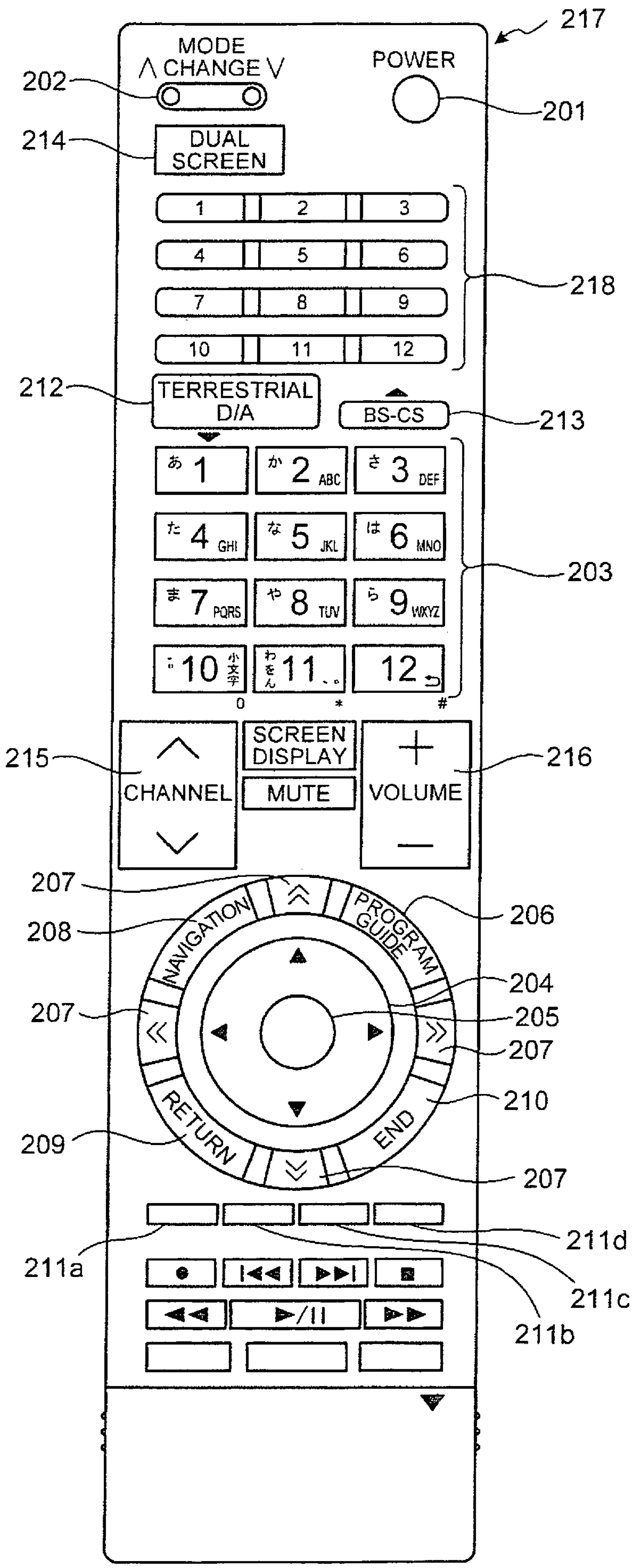
217
MODE
Λ CHANGE V
POWER
202
201
214
DUAL SCREEN
218
212
TERRESTRIAL D/A
BS-CS
213
203
215
SCREEN DISPLAY
MUTE
CHANNEL
VOLUME
216
207
208
NAVIGATION
PROGRAM GUIDE
206
204
205
207
210
RETURN
END
209
207
211a
211b
211c
211d

FIG.3

TITLE: LUNCHTIME COMEDY SHOW
CHANNEL: 00
DATE: AUG. 1, 2008 12:00 - 12:40
CAST: XXXXX, YYYYY
SUBTITLE: GREAT LINE UP OF COMEDIANS INVITE YOU TO ENJOY NOON OF HILARIOUS ENTERTAINMENT
GENRE: COMEDY

# FIG.4

| BROAD-CAST DATE AND TIME | PROGRAM INFORMATION | | | | BROAD-CAST STATION | BROAD-CAST PERIOD | STATUS | | | | | |
|---|---|---|---|---|---|---|---|---|---|---|---|---|
| | TITLE | CAST | KEYWORD | GENRE | | | CURRENTLY BROADCASTED | PRO-GRAMMED | CURRENTLY RECORDED | TIMER-RECORDED | CURRENTLY ARCHIVED | ARCHIVED |
| △/○ | B5536OM | AABC | RESORT··· | DRAMA | A | PM 8:00 TO 9:00 | | | | | | ○ |
| △/× | H×325R | ······ | ······ | NEWS | C | AM10:00 TO 11:00 | | | | ○ | | ○ |
| △/× | L358△*6 | ······ | ······ | SPORTS | A | PM 11:00 TO 12:30 | | | | | | ○ |
| △/□ | CC4R4i9Z | AABC | ······ | DRAMA | E | PM 8:00 TO 9:00 | ○ | | | | ○ | |
| △/△○ | ZZRCCR4 | ······ | ······ | DRAMA | B | PM 8:00 TO 9:00 | | ○ | | | | |
| △/△○ | R4G257O x | ······ | ······ | NEWS | A | PM 10:00 TO 11:00 | | | | | | |
| □/× | ZZRCC4Z | ······ | ······ | ······ | ······ | ······ | | ○ | | | | |
| ⋮ | ⋮ | ⋮ | ⋮ | ⋮ | ⋮ | ⋮ | ⋮ | ⋮ | ⋮ | ⋮ | ⋮ | ⋮ |

FIG.5

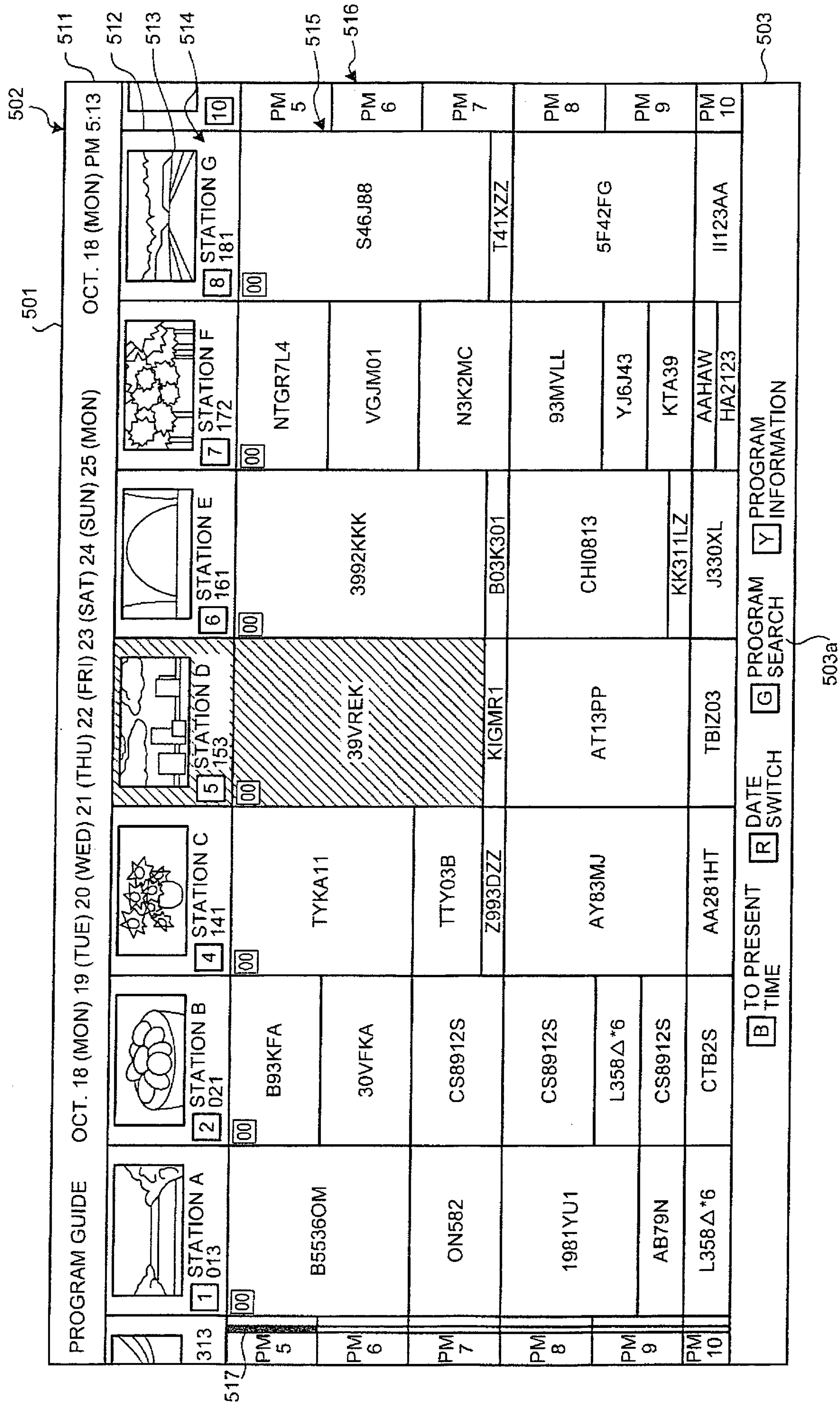
PROGRAM GUIDE
OCT. 18 (MON) 19 (TUE) 20 (WED) 21 (THU) 22 (FRI) 23 (SAT) 24 (SUN) 25 (MON)
OCT. 18 (MON) PM 5:13
313
1 STATION A 013
2 STATION B 021
4 STATION C 141
5 STATION D 153
6 STATION E 161
7 STATION F 172
8 STATION G 181
10
00
PM 5
PM 6
PM 7
PM 8
PM 9
PM 10
B5536OM
ON582
1981YU1
AB79N
L358Δ*6
B93KFA
30VFKA
CS8912S
CS8912S
L358Δ*6
CS8912S
CTB2S
TYKA11
TTY03B
Z993DZZ
AY83MJ
AA281HT
39VREK
KIGMR1
AT13PP
TBIZ03
3992KKK
B03K301
CHI0813
KK311LZ
J330XL
NTGR7L4
VGJM01
N3K2MC
93MVLL
YJ6J43
KTA39
AAHAW
HA2123
S46J88
T41XZZ
5F42FG
II123AA
B TO PRESENT TIME
R DATE SWITCH
G PROGRAM SEARCH
Y PROGRAM INFORMATION
501
502
503
503a
511
512
513
514
515
516
517

FIG.6

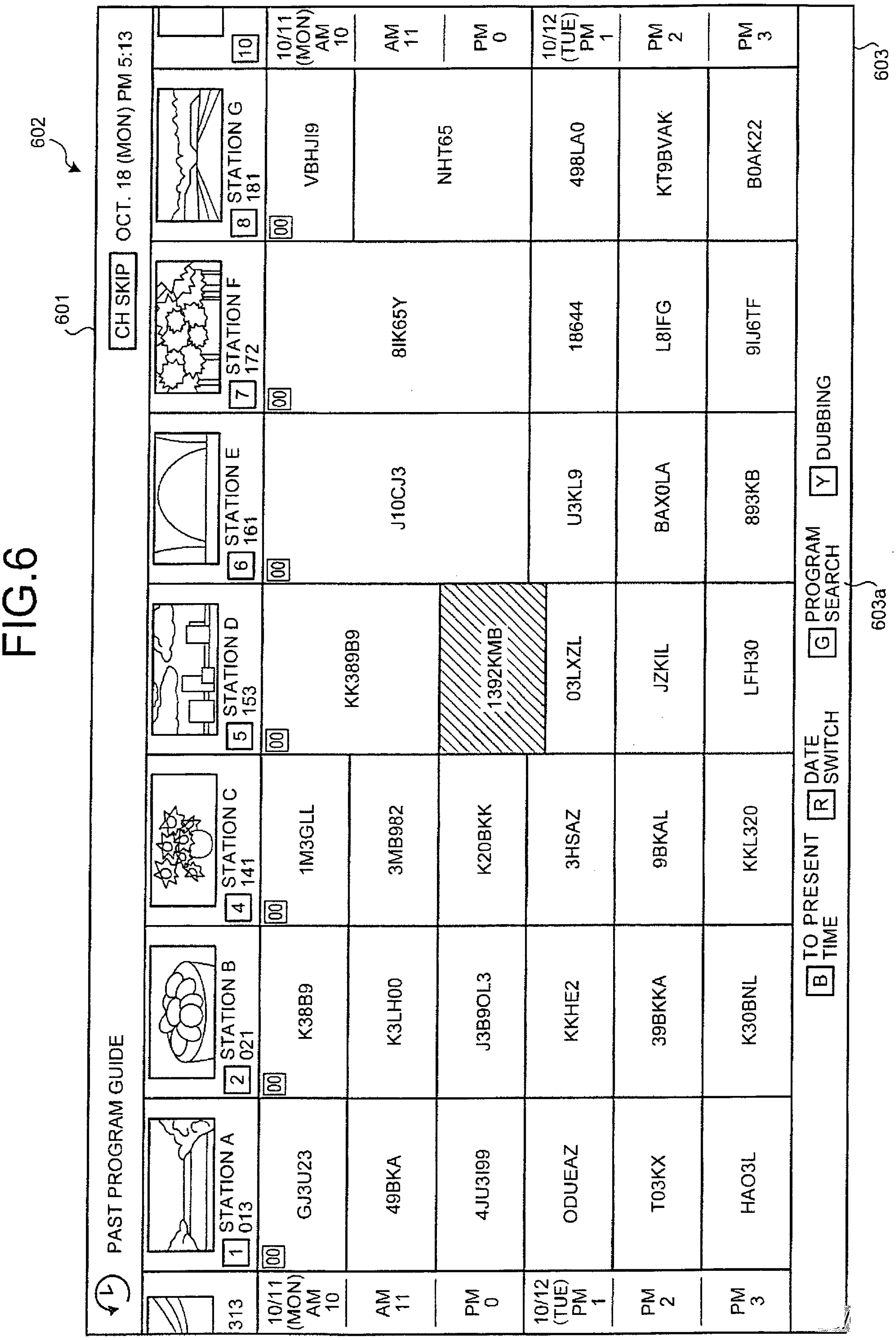
PAST PROGRAM GUIDE
CH SKIP
OCT. 18 (MON) PM 5:13
313
1 STATION A 013
2 STATION B 021
4 STATION C 141
5 STATION D 153
6 STATION E 161
7 STATION F 172
8 STATION G 181
10
00
10/11 (MON) AM 10
AM 11
PM 0
10/12 (TUE) PM 1
PM 2
PM 3
GJ3U23
49BKA
4JU3I99
ODUEAZ
T03KX
HAO3L
K38B9
K3LH00
J3B9OL3
KKHE2
39BKKA
K30BNL
1M3GLL
3MB982
K20BKK
3HSAZ
9BKAL
KKL320
KK389B9
1392KMB
03LXZL
JZKIL
LFH30
J10CJ3
U3KL9
BAX0LA
893KB
8IK65Y
18644
L8IFG
9IJ6TF
VBHJI9
NHT65
498LA0
KT9BVAK
B0AK22
B TO PRESENT TIME
R DATE SWITCH
G PROGRAM SEARCH
Y DUBBING
601
602
603
603a

FIG.7

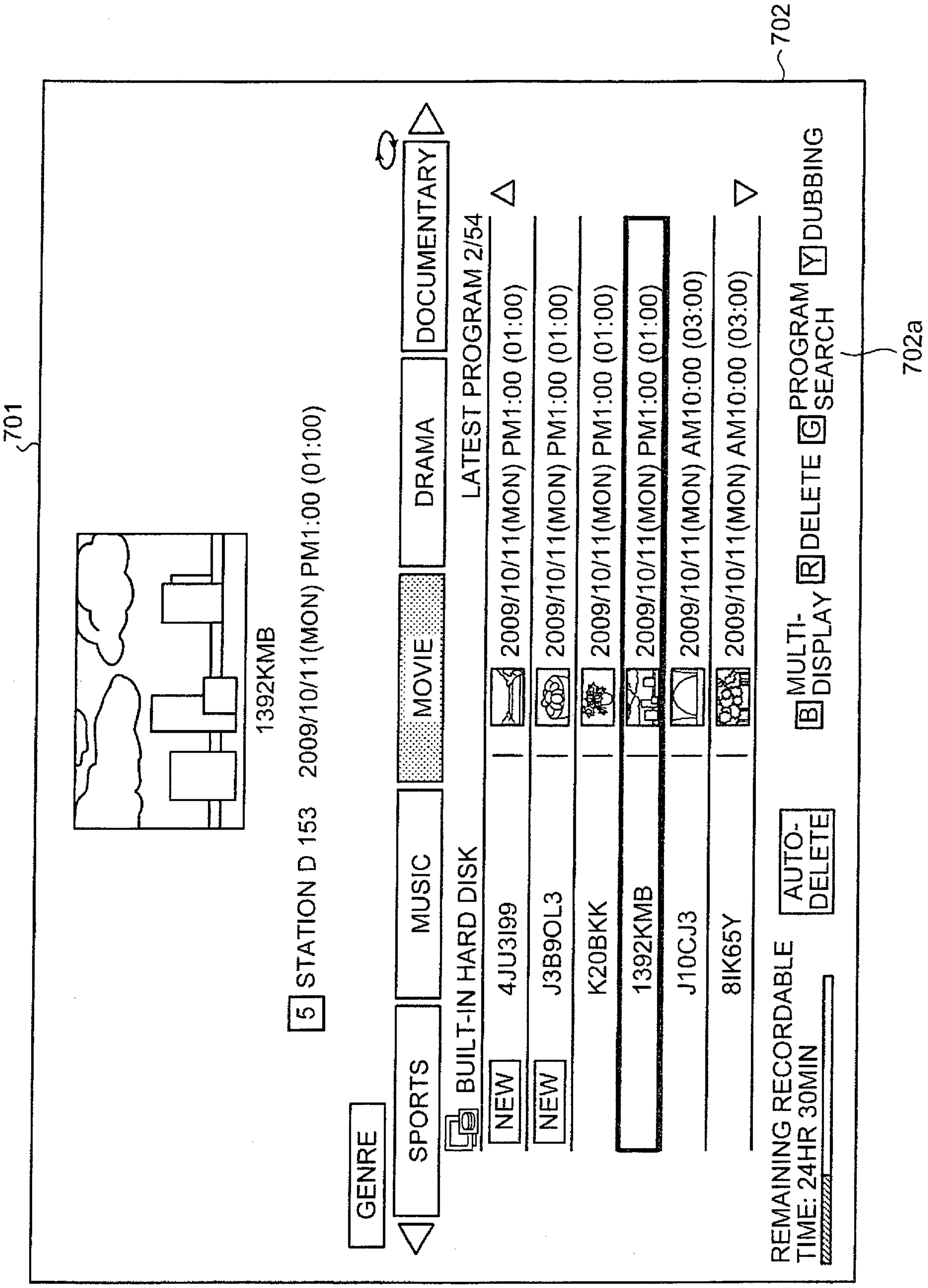
701
702
702a
GENRE
SPORTS
MUSIC
MOVIE
DRAMA
DOCUMENTARY
5 STATION D 153
1392KMB
2009/10/11(MON) PM1:00 (01:00)
BUILT-IN HARD DISK
LATEST PROGRAM 2/54
NEW 4JU3I99 2009/10/11(MON) PM1:00 (01:00)
NEW J3B9OL3 2009/10/11(MON) PM1:00 (01:00)
K20BKK 2009/10/11(MON) PM1:00 (01:00)
1392KMB 2009/10/11(MON) PM1:00 (01:00)
J10CJ3 2009/10/11(MON) AM10:00 (03:00)
8IK65Y 2009/10/11(MON) AM10:00 (03:00)
REMAINING RECORDABLE TIME: 24HR 30MIN
AUTO-DELETE
B MULTI-DISPLAY
R DELETE
G PROGRAM SEARCH
Y DUBBING

FIG.8A

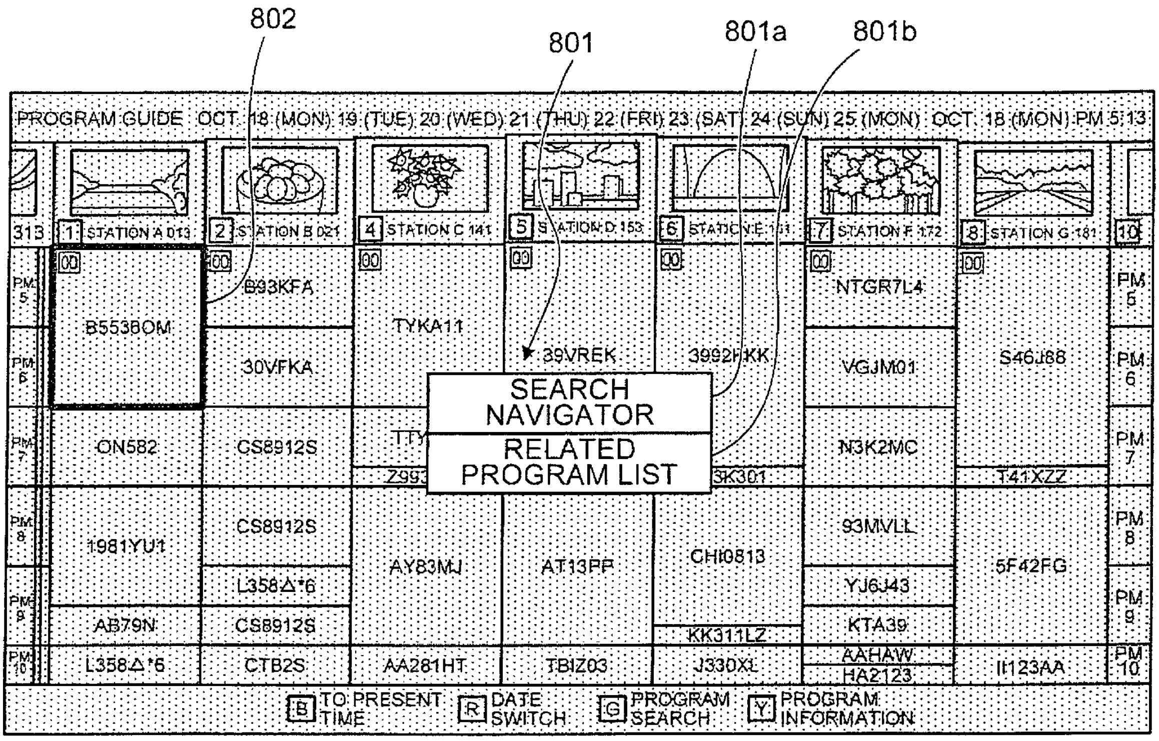
802
801
801a
801b
PROGRAM GUIDE OCT. 18 (MON) 19 (TUE) 20 (WED) 21 (THU) 22 (FRI) 23 (SAT) 24 (SUN) 25 (MON) OCT. 18 (MON) PM 5:13
1 STATION A 013
2 STATION B 021
4 STATION C 141
5 STATION D 153
6 STATION E 161
7 STATION F 172
8 STATION G 181
B5536OM
B93KFA
30VFKA
TYKA11
39VREK
3992HKK
NTGR7L4
VGJM01
S46J88
ON582
CS8912S
N3K2MC
T41XZZ
SEARCH NAVIGATOR
RELATED PROGRAM LIST
1981YU1
AY83MJ
AT13PP
CHI0813
93MVLL
5F42FG
L358Δ*6
YJ6J43
AB79N
KTA39
KK311LZ
CTB2S
AA281HT
TBIZ03
J330XL
AAHAW
HA2123
II123AA
B TO PRESENT TIME
R DATE SWITCH
G PROGRAM SEARCH
Y PROGRAM INFORMATION

FIG.8B

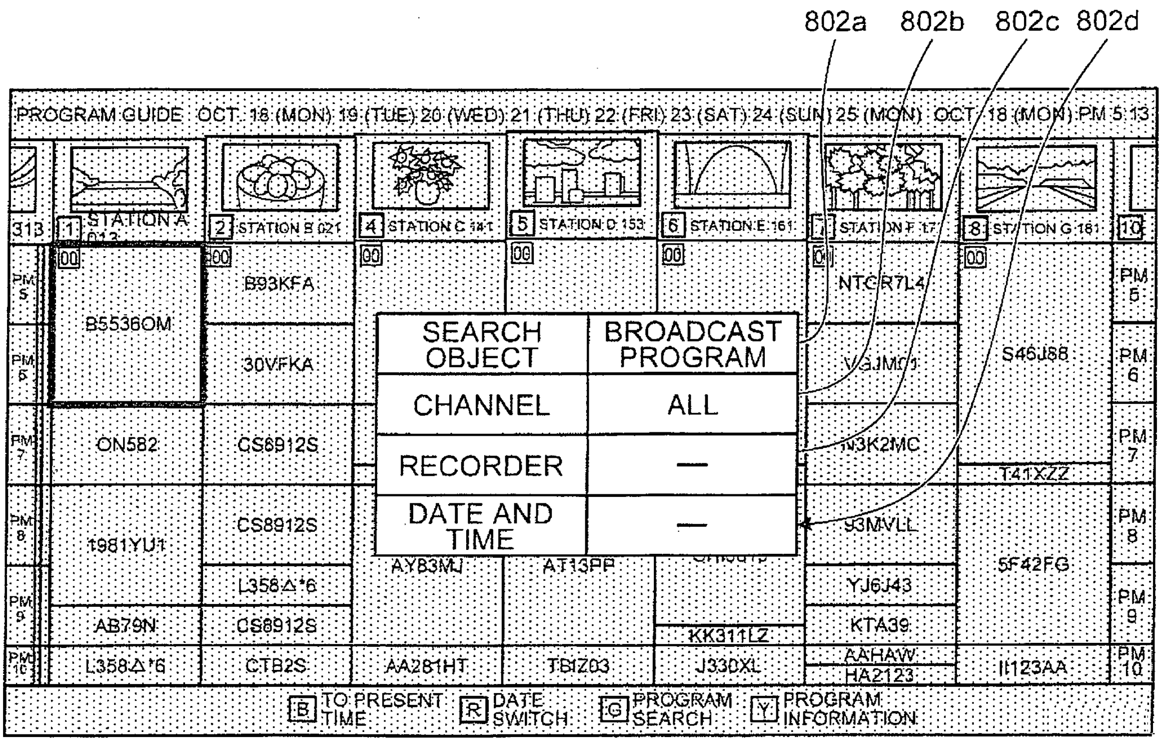
802a
802b
802c
802d
PROGRAM GUIDE OCT. 18 (MON) 19 (TUE) 20 (WED) 21 (THU) 22 (FRI) 23 (SAT) 24 (SUN) 25 (MON) OCT. 18 (MON) PM 5:13
SEARCH OBJECT
BROADCAST PROGRAM
CHANNEL
ALL
RECORDER
—
DATE AND TIME
—
B5536OM
B93KFA
30VFKA
ON582
CS8912S
1981YU1
L358Δ*6
AB79N
NTGR7L4
S46J88
N3K2MC
T41XZZ
93MVLL
5F42FG
YJ6J43
KTA39
KK311LZ
CTB2S
AA281HT
TBIZ03
J330XL
AAHAW
HA2123
II123AA
B TO PRESENT TIME
R DATE SWITCH
G PROGRAM SEARCH
Y PROGRAM INFORMATION

FIG.9A

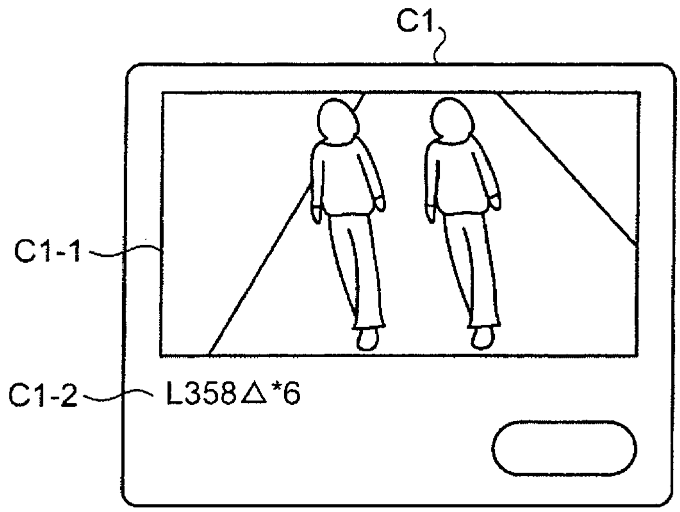
C1
C1-1
C1-2
L358△*6

FIG.9B

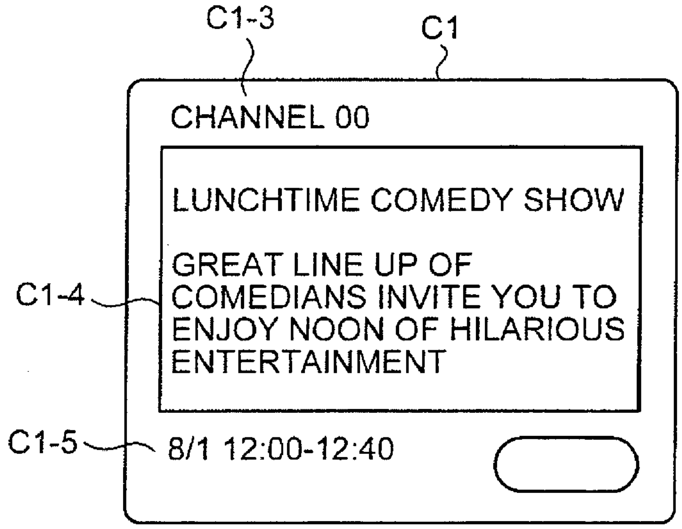
C1-3
C1
CHANNEL 00
LUNCHTIME COMEDY SHOW
GREAT LINE UP OF COMEDIANS INVITE YOU TO ENJOY NOON OF HILARIOUS ENTERTAINMENT
C1-4
C1-5
8/1 12:00-12:40

FIG.10A

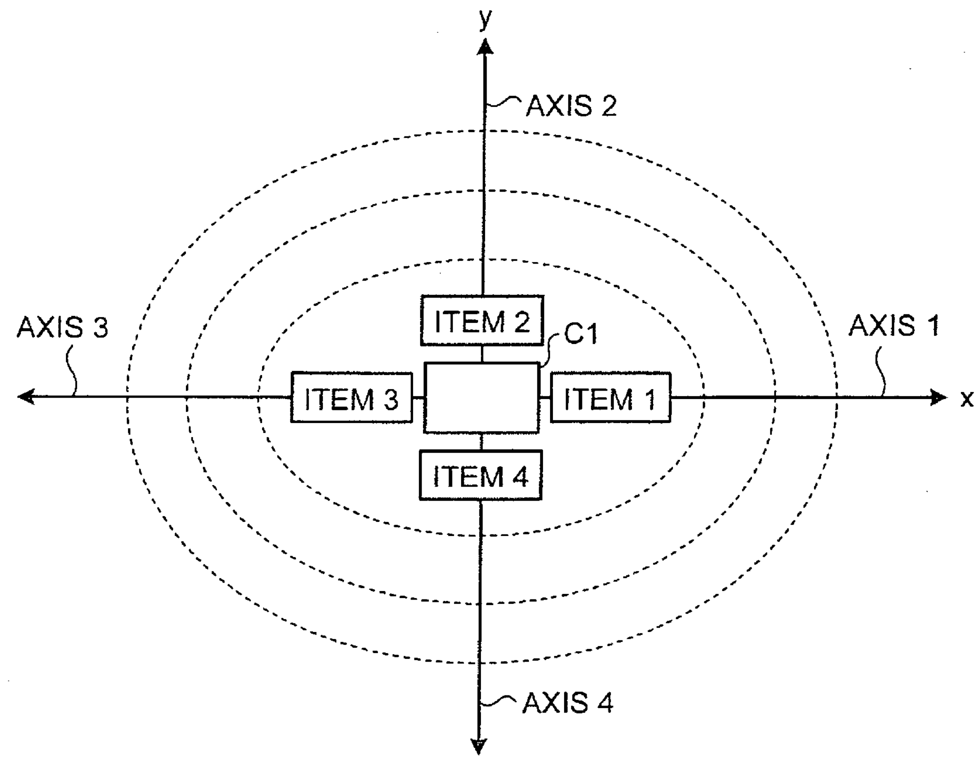


FIG.10B

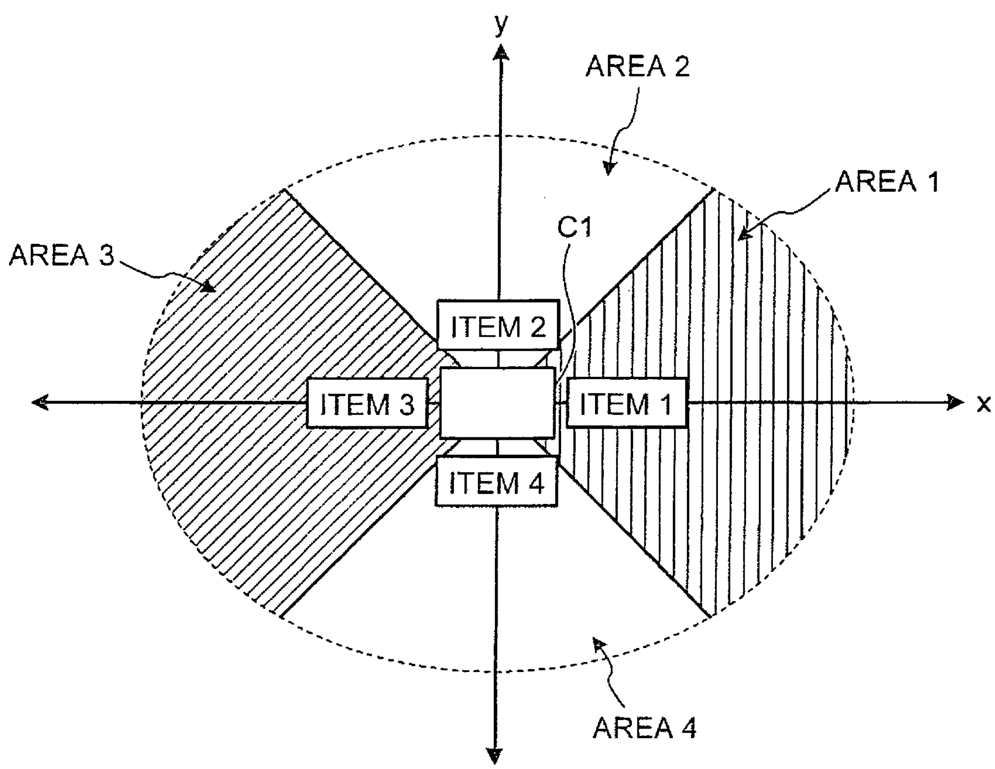

FIG.11

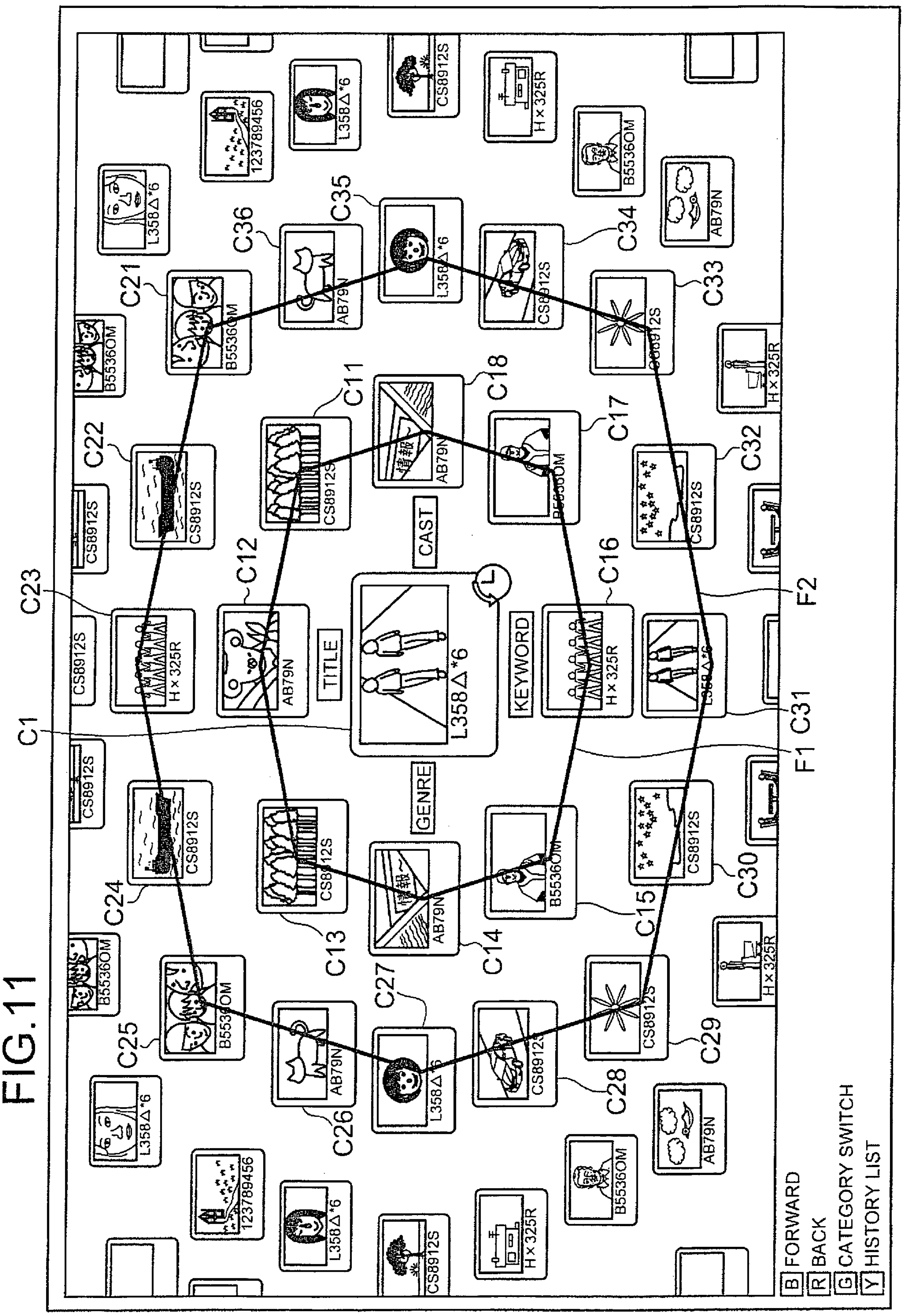
C1
C11
C12
C13
C14
C15
C16
C17
C18
C21
C22
C23
C24
C25
C26
C27
C28
C29
C30
C31
C32
C33
C34
C35
C36
F1
F2
CAST
TITLE
KEYWORD
GENRE
L358Δ*6
AB79N
CS8912S
B5536OM
H×325R
123789456
B FORWARD
R BACK
G CATEGORY SWITCH
Y HISTORY LIST

FIG.12

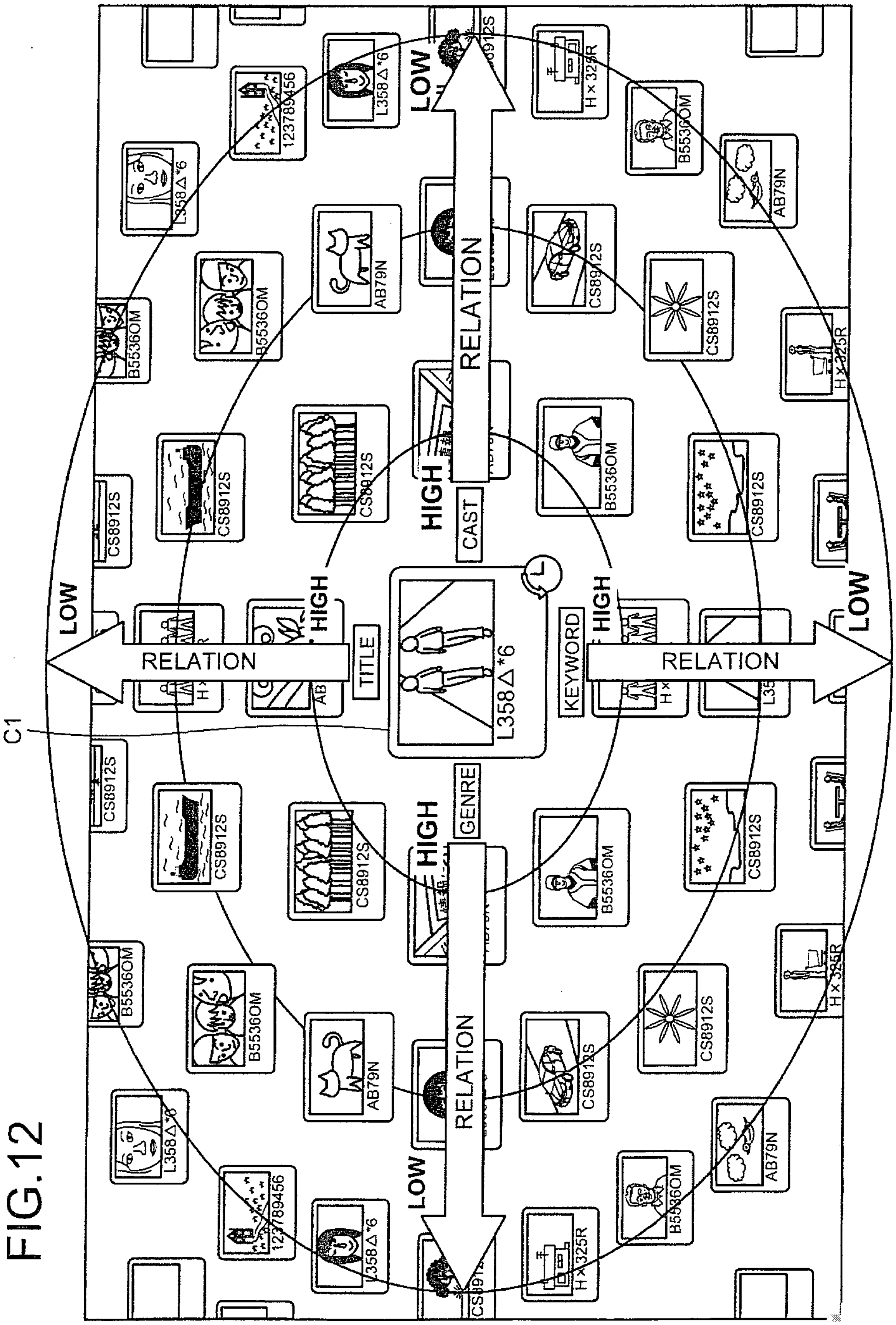
C1
RELATION
RELATION
RELATION
RELATION
HIGH
HIGH
HIGH
HIGH
LOW
LOW
LOW
LOW
TITLE
CAST
KEYWORD
GENRE
L358Δ*6

FIG.13

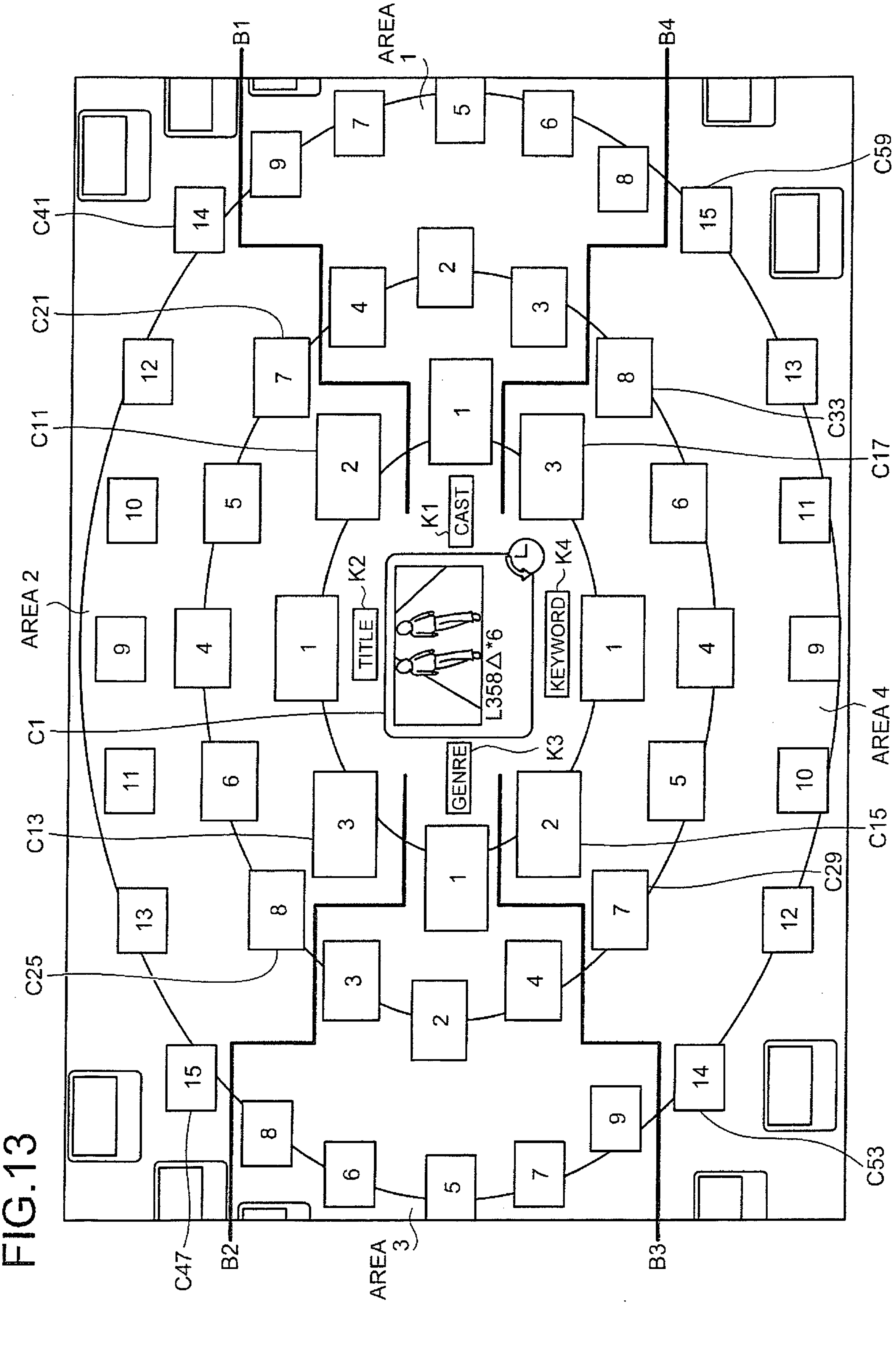
AREA 1
AREA 2
AREA 3
AREA 4
B1
B2
B3
B4
C1
C11
C13
C15
C17
C21
C25
C29
C33
C41
C47
C53
C59
K1
K2
K3
K4
CAST
TITLE
GENRE
KEYWORD
L358Δ*6

FIG.14

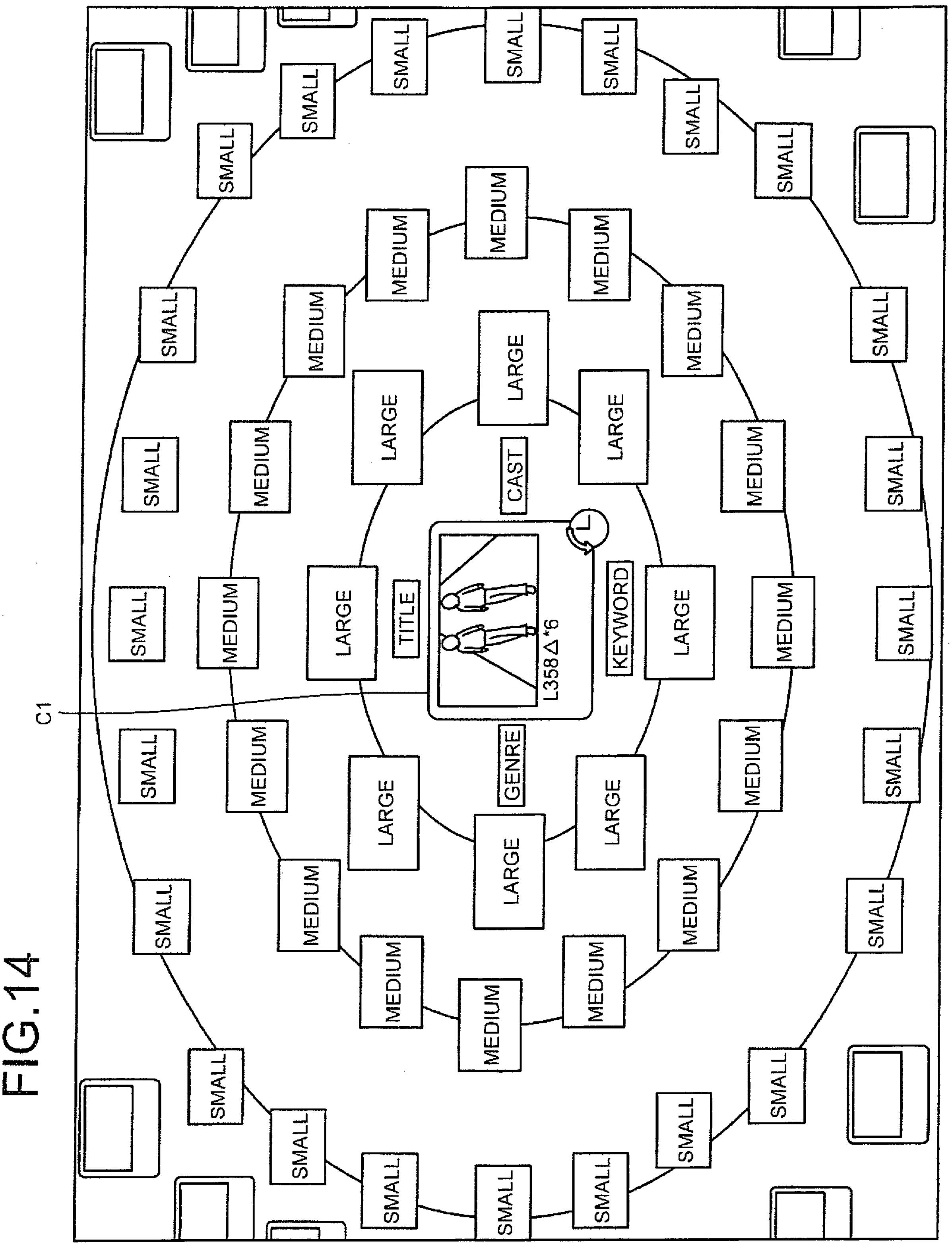

FIG.15

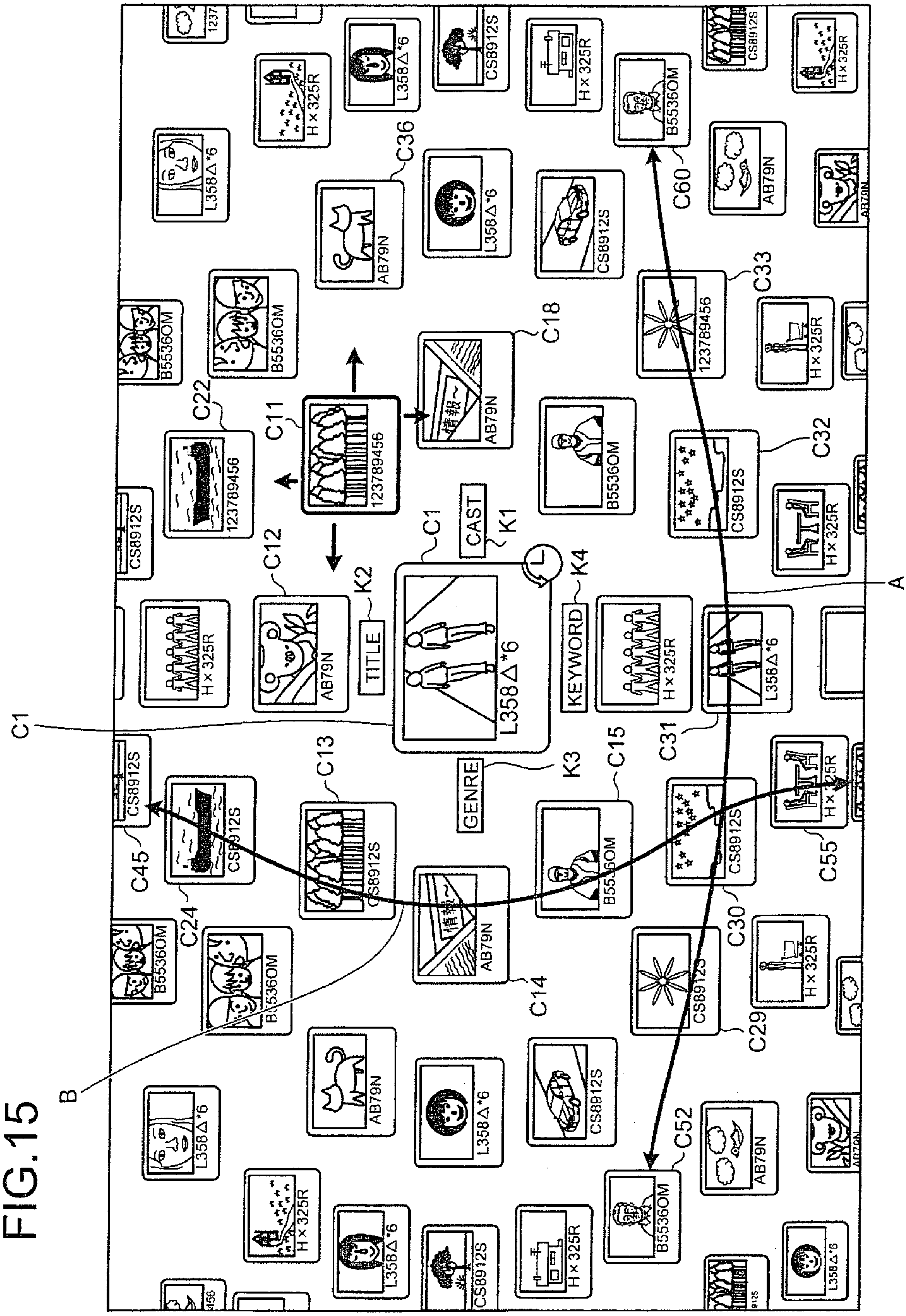
C1
C11
C12
C13
C14
C15
C18
C22
C24
C29
C30
C31
C32
C33
C36
C45
C52
C55
C60
CAST
K1
TITLE
K2
GENRE
K3
KEYWORD
K4
A
B
L358Δ*6
123789456
AB79N
CS8912S
B5536OM
H×325R

FIG.16

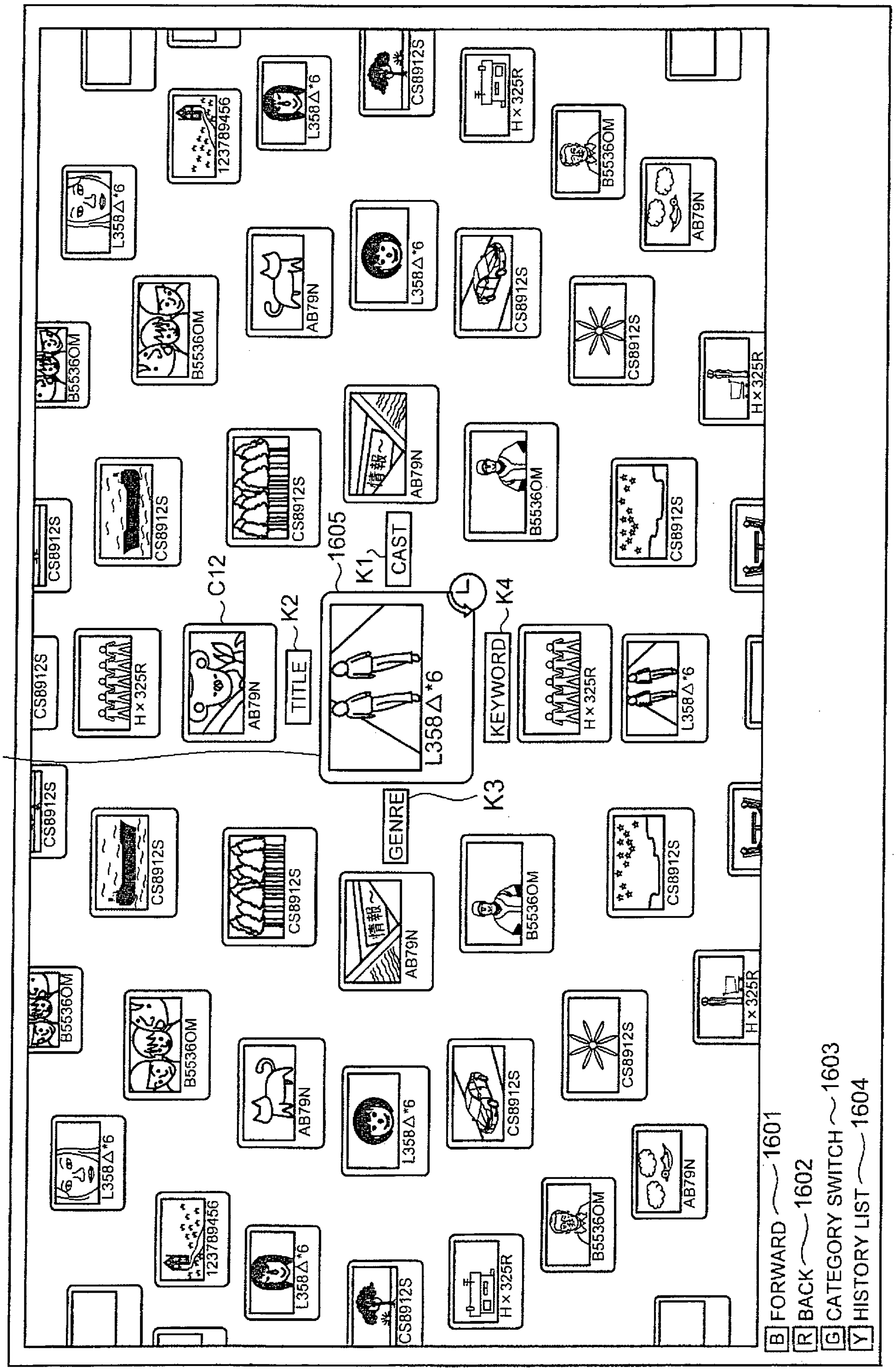
C1
C12
1605
K1
CAST
K2
TITLE
K3
GENRE
K4
KEYWORD
L358Δ*6
B FORWARD 1601
R BACK 1602
G CATEGORY SWITCH 1603
Y HISTORY LIST 1604

FIG.17

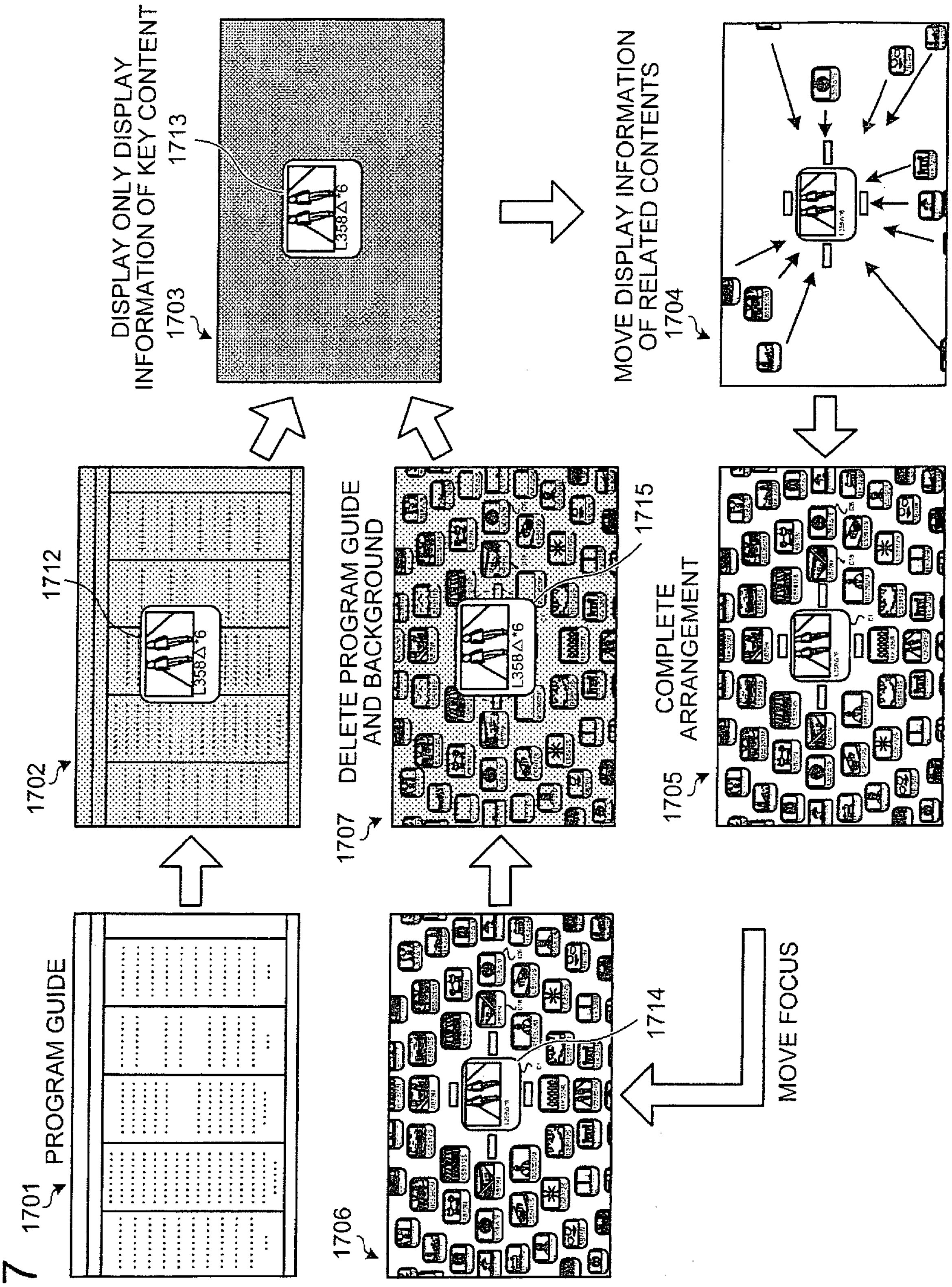
1701
PROGRAM GUIDE
1702
1712
L358△*6
DISPLAY ONLY DISPLAY INFORMATION OF KEY CONTENT
1703
1713
1706
1714
1707
DELETE PROGRAM GUIDE AND BACKGROUND
1715
MOVE FOCUS
MOVE DISPLAY INFORMATION OF RELATED CONTENTS
1704
1705
COMPLETE ARRANGEMENT

FIG.18

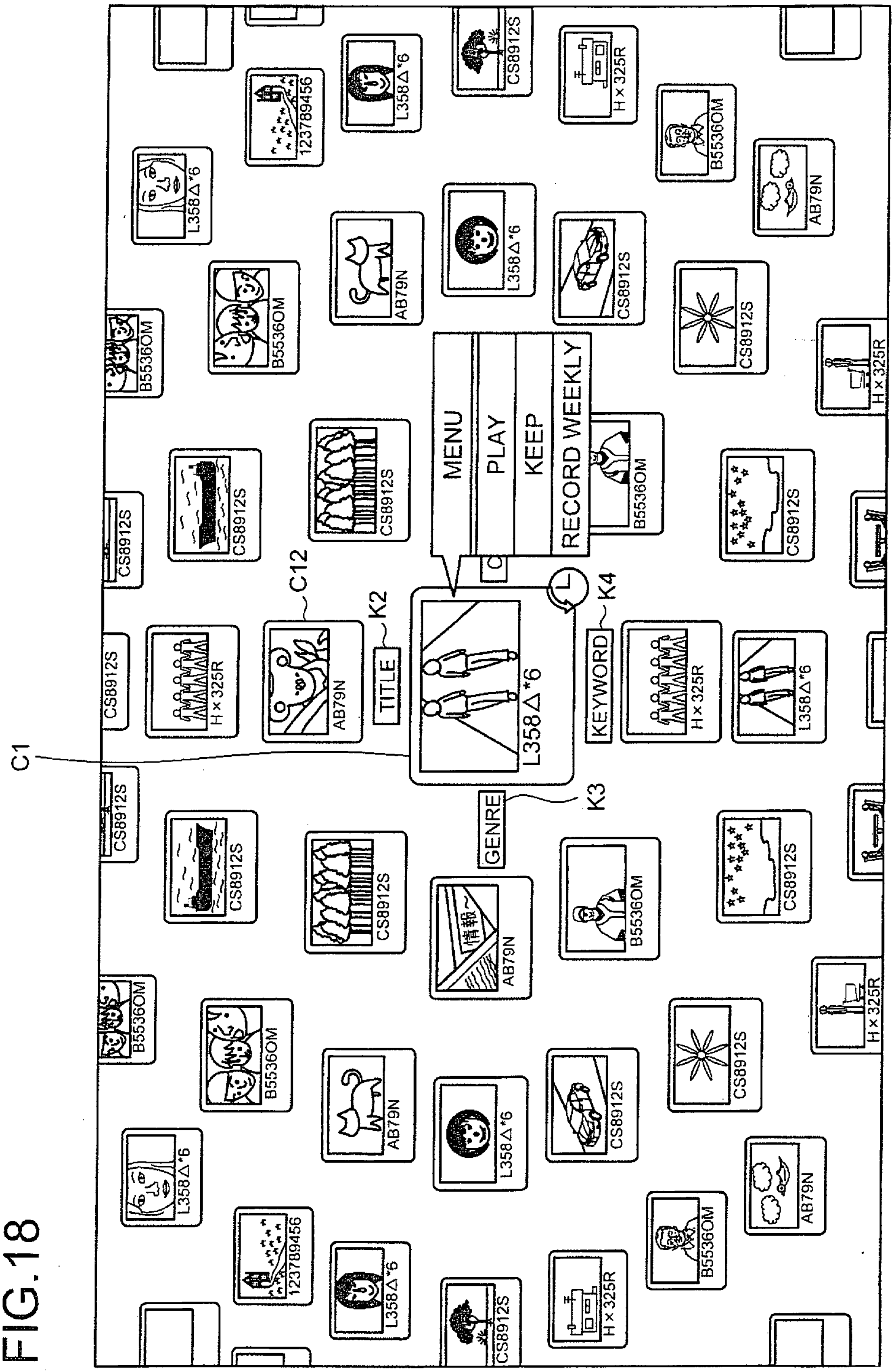
C1
C12
K2
K3
K4
MENU
PLAY
KEEP
RECORD WEEKLY
TITLE
GENRE
KEYWORD
L358Δ*6
H×325R
AB79N
CS8912S
B5536OM
123789456
情報～

FIG.19

| CURRENT CONTENT | FUTURE CONTENT | AUTO-RECORDED CONTENT | PVR CONTENT |
|---|---|---|---|
| PLAY | TIMER PLAY | PLAY (REPRODUCE) | RESUME PLAY |
| RECORD | TIMER RECORD | KEEP | — |
| RECORD WEEKLY | RECORD WEEKLY | RECORD WEEKLY | — |

FIG.20

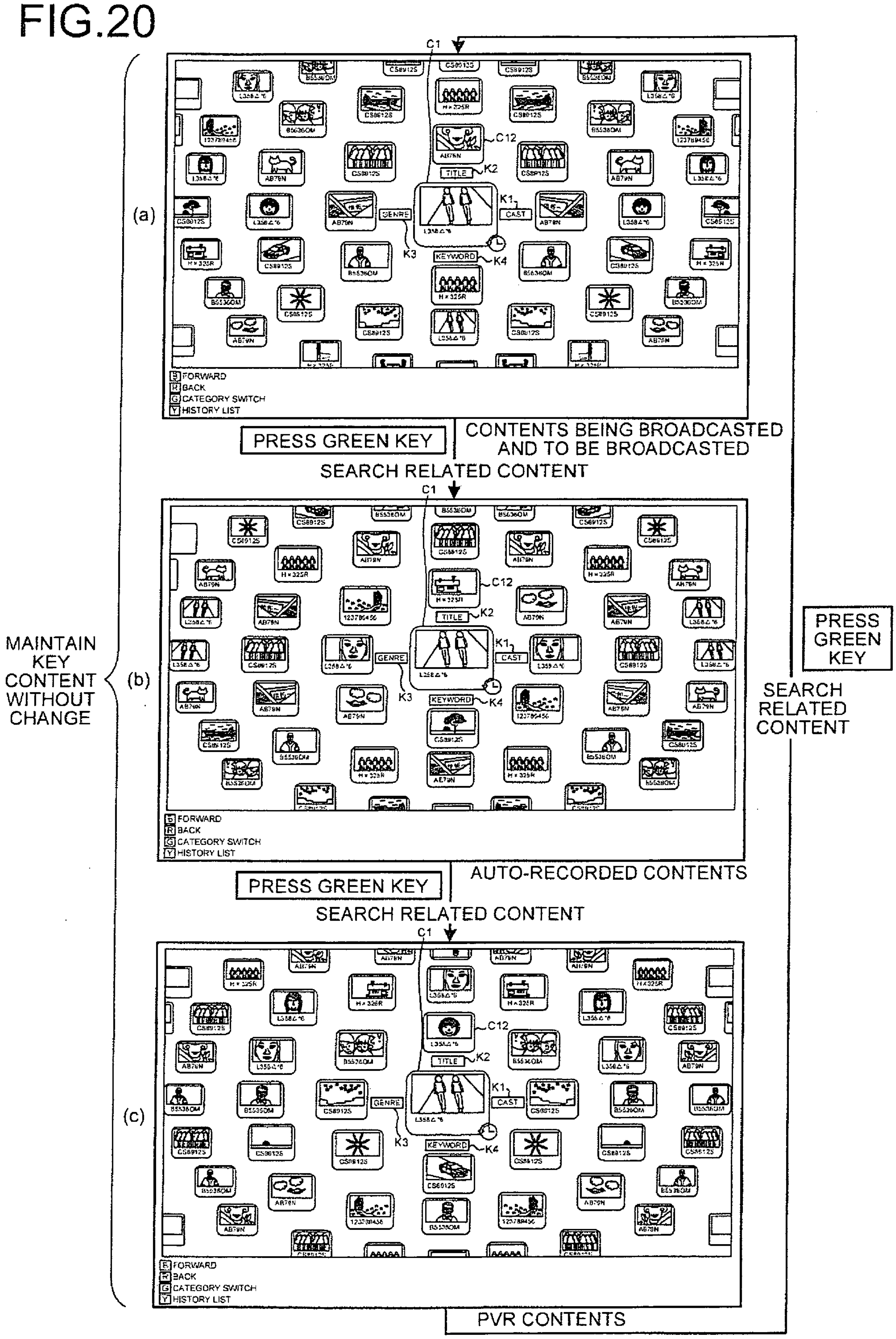
C1
C12
TITLE
K2
GENRE
K1
CAST
K3
KEYWORD
K4
(a)
B FORWARD
R BACK
G CATEGORY SWITCH
Y HISTORY LIST
PRESS GREEN KEY
CONTENTS BEING BROADCASTED AND TO BE BROADCASTED
SEARCH RELATED CONTENT
(b)
MAINTAIN KEY CONTENT WITHOUT CHANGE
PRESS GREEN KEY
SEARCH RELATED CONTENT
AUTO-RECORDED CONTENTS
PRESS GREEN KEY
SEARCH RELATED CONTENT
(c)
PVR CONTENTS

FIG.21

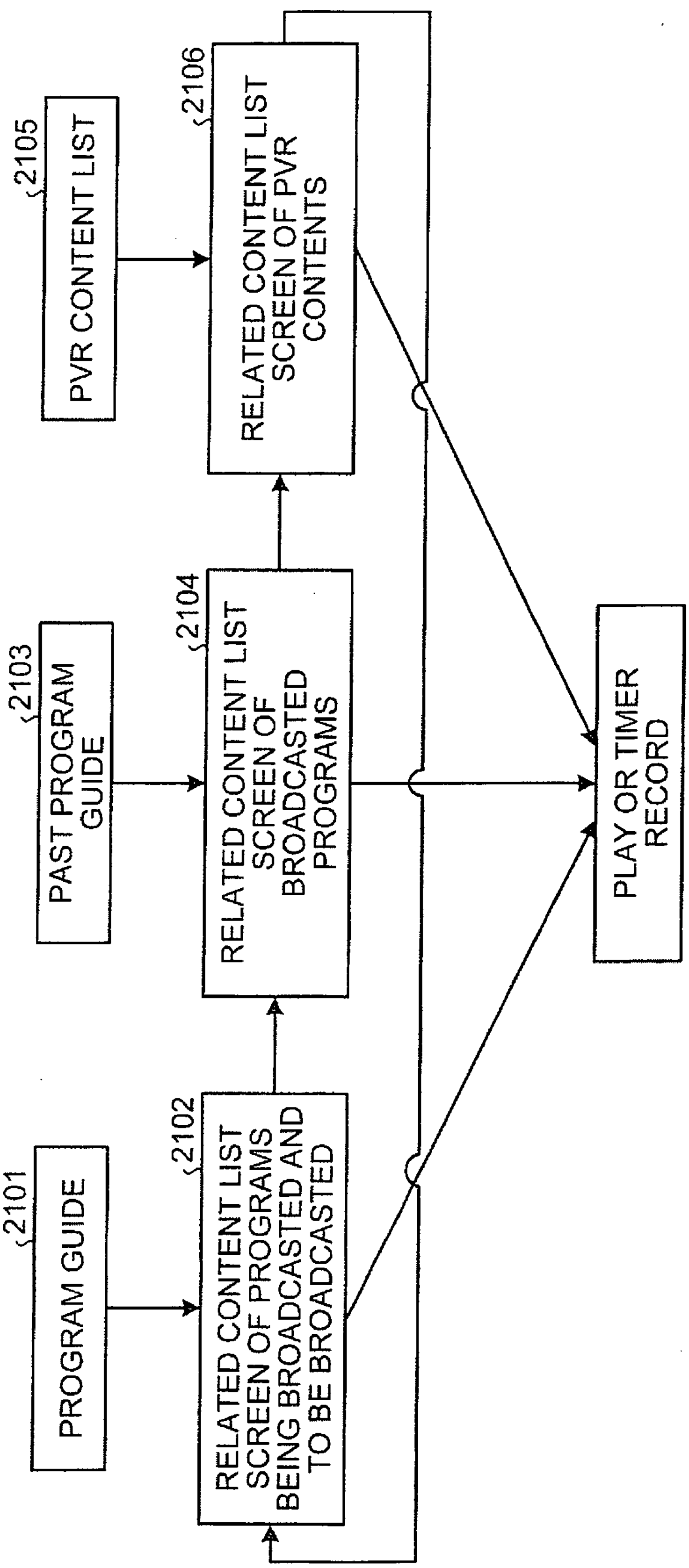
PROGRAM GUIDE
2101
RELATED CONTENT LIST SCREEN OF PROGRAMS BEING BROADCASTED AND TO BE BROADCASTED
2102
PAST PROGRAM GUIDE
2103
RELATED CONTENT LIST SCREEN OF BROADCASTED PROGRAMS
2104
PVR CONTENT LIST
2105
RELATED CONTENT LIST SCREEN OF PVR CONTENTS
2106
PLAY OR TIMER RECORD

FIG.22

| ORDER | PROGRAM INFORMATION | | | | BROADCAST STATION | BROADCAST DATE AND TIME | BROADCAST PERIOD | THUMBNAIL IMAGE |
|---|---|---|---|---|---|---|---|---|
| | TITLE | CAST | KEYWORD | GENRE | | | | |
| 1 | L358△*6 | AABC | RESORT······ | DRAMA | A | △/○ | PM 8:00 TO 9:00 | B5536OM.jpg |
| 2 | H×325R | ······ | ······ | NEWS | C | △/× | AM 10:00 TO 11:00 | H×325R.jpg |
| 3 | B5536OM | ······ | ······ | SPORTS | A | △/× | PM 11:00 TO 12:30 | L358△*6.jpg |
| 4 | CC4R4i9Z | AABC | ······ | DRAMA | E | △/□ | PM 8:00 TO 9:00 | CC4R4i9Z.jpg |
| 5 | ZZRCCR4 | ······ | ······ | DRAMA | B | △/△○ | PM 8:00 TO 9:00 | ZZRCCR4.jpg |
| 6 | R4G257Ox | ······ | ······ | NEWS | A | △/△○ | PM 10:00 TO 11:00 | R4G257Ox.jpg |
| 7 | ZZRCC4Z | ······ | ······ | ······ | ······ | □/× | ······ | ······ |
| ··· | ··· | ··· | ··· | ··· | ··· | ··· | ··· | ··· |

FIG.23A

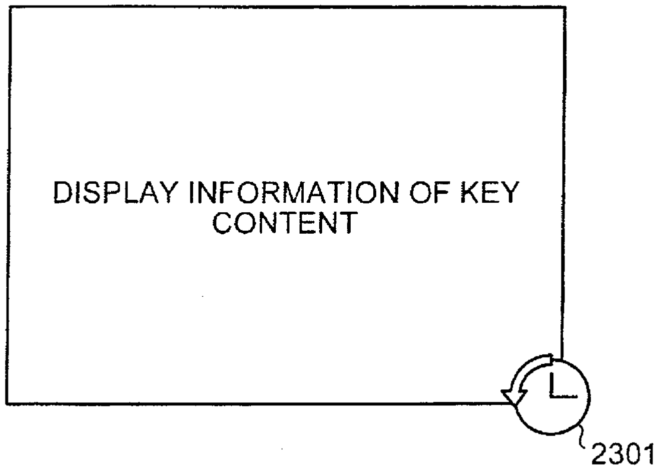


FIG.23B

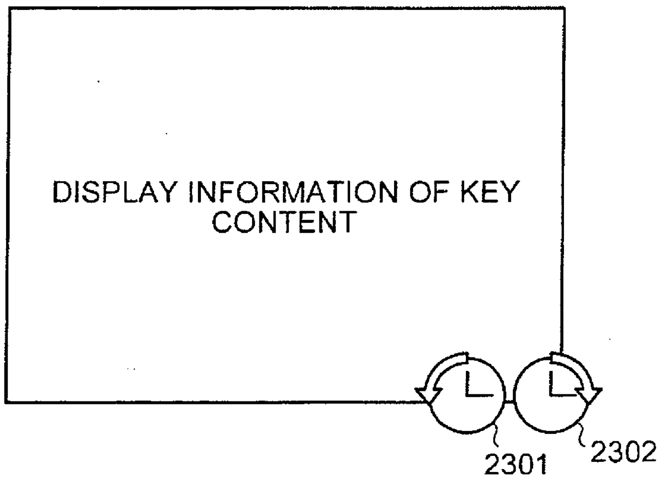


FIG.23C

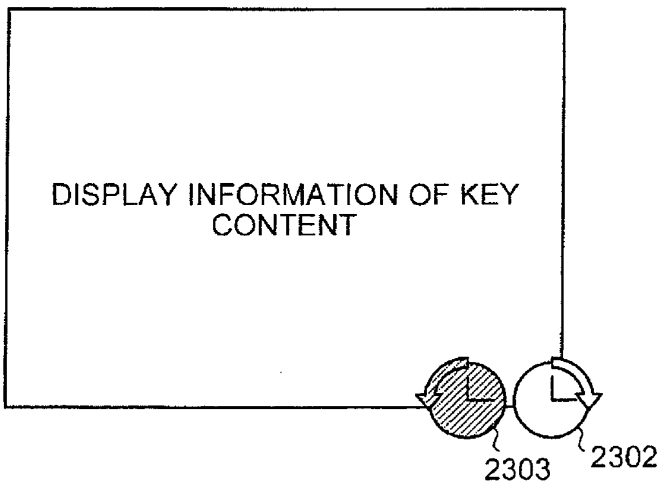

FIG.24

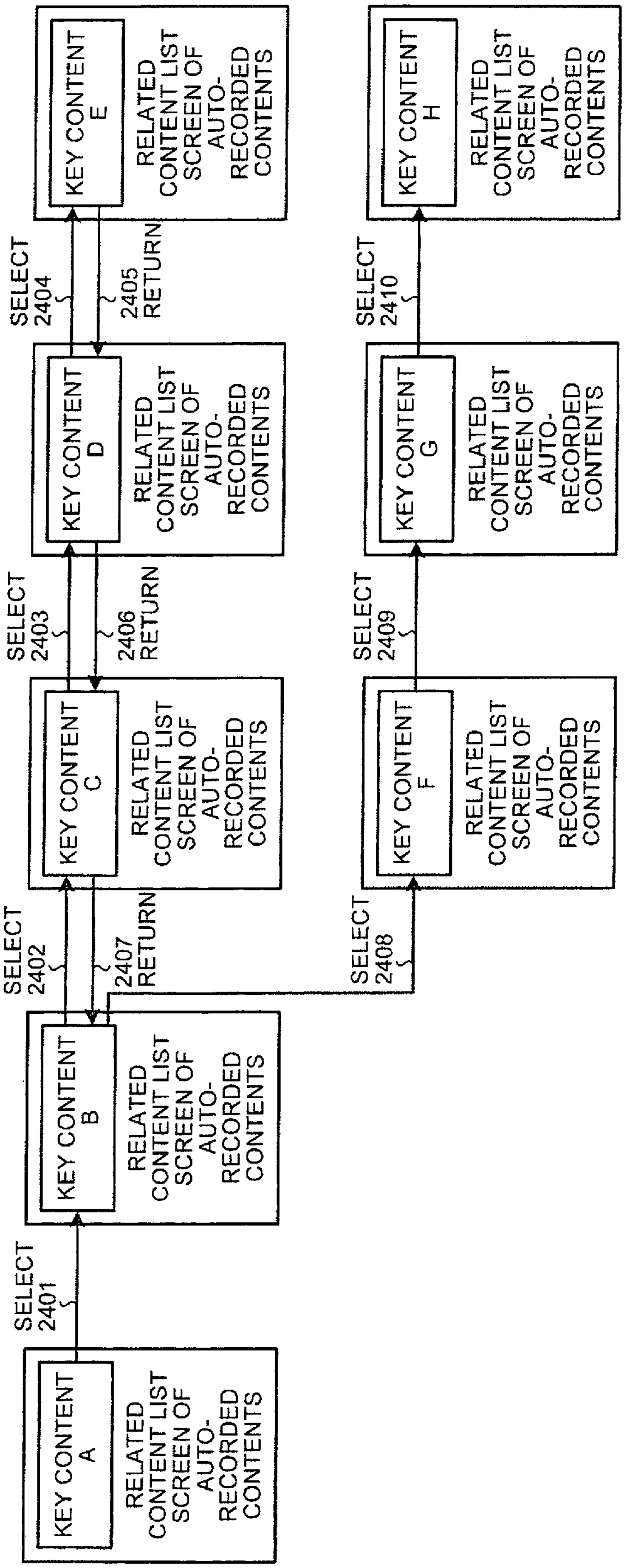
KEY CONTENT A
RELATED CONTENT LIST SCREEN OF AUTO-RECORDED CONTENTS
SELECT 2401
KEY CONTENT B
RELATED CONTENT LIST SCREEN OF AUTO-RECORDED CONTENTS
SELECT 2402
2407 RETURN
KEY CONTENT C
RELATED CONTENT LIST SCREEN OF AUTO-RECORDED CONTENTS
SELECT 2403
2406 RETURN
KEY CONTENT D
RELATED CONTENT LIST SCREEN OF AUTO-RECORDED CONTENTS
SELECT 2404
2405 RETURN
KEY CONTENT E
RELATED CONTENT LIST SCREEN OF AUTO-RECORDED CONTENTS
SELECT 2408
KEY CONTENT F
RELATED CONTENT LIST SCREEN OF AUTO-RECORDED CONTENTS
SELECT 2409
KEY CONTENT G
RELATED CONTENT LIST SCREEN OF AUTO-RECORDED CONTENTS
SELECT 2410
KEY CONTENT H
RELATED CONTENT LIST SCREEN OF AUTO-RECORDED CONTENTS

FIG.25

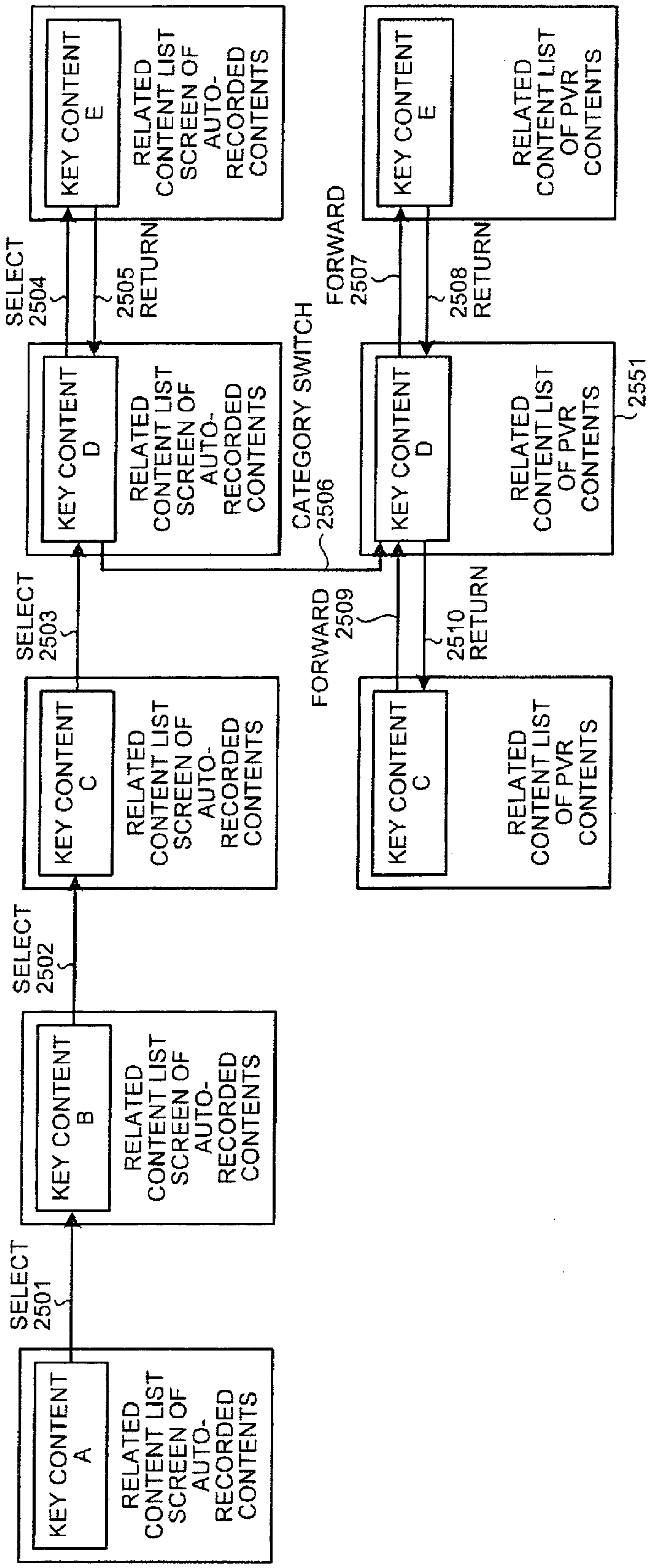
KEY CONTENT A
RELATED CONTENT LIST SCREEN OF AUTO-RECORDED CONTENTS
SELECT 2501
KEY CONTENT B
RELATED CONTENT LIST SCREEN OF AUTO-RECORDED CONTENTS
SELECT 2502
KEY CONTENT C
RELATED CONTENT LIST SCREEN OF AUTO-RECORDED CONTENTS
SELECT 2503
KEY CONTENT D
RELATED CONTENT LIST SCREEN OF AUTO-RECORDED CONTENTS
SELECT 2504
2505 RETURN
KEY CONTENT E
RELATED CONTENT LIST SCREEN OF AUTO-RECORDED CONTENTS
CATEGORY SWITCH 2506
KEY CONTENT C
RELATED CONTENT LIST OF PVR CONTENTS
FORWARD 2509
2510 RETURN
KEY CONTENT D
RELATED CONTENT LIST OF PVR CONTENTS
2551
FORWARD 2507
2508 RETURN
KEY CONTENT E
RELATED CONTENT LIST OF PVR CONTENTS

FIG.26

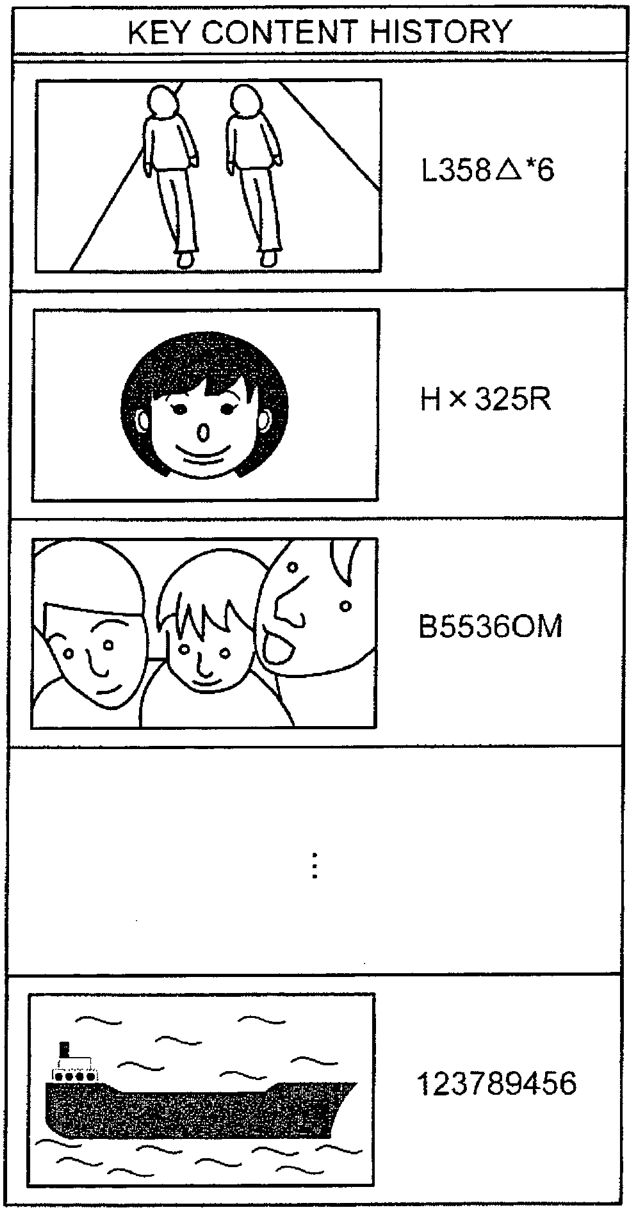

FIG.27

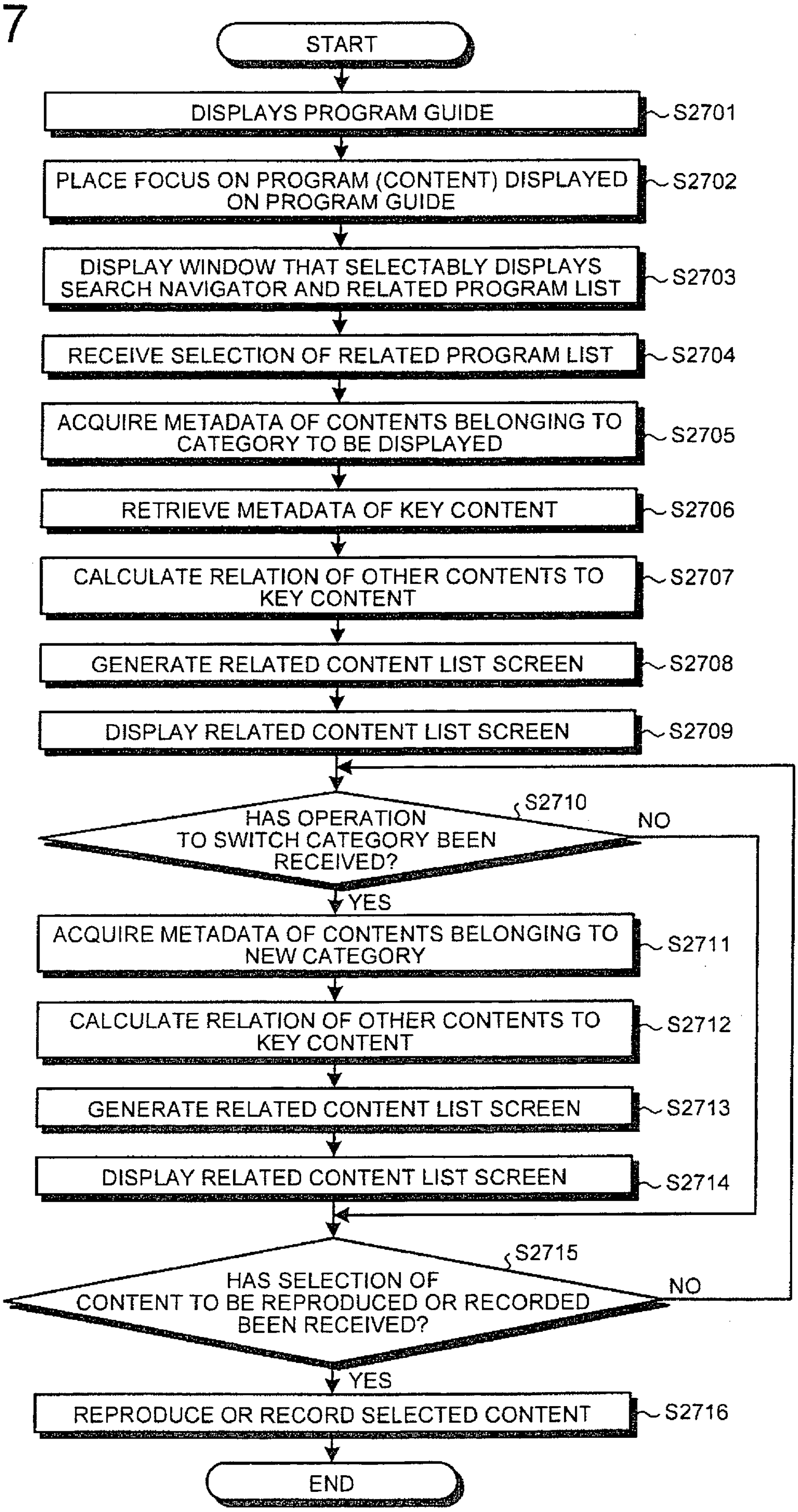
START
DISPLAYS PROGRAM GUIDE
S2701
PLACE FOCUS ON PROGRAM (CONTENT) DISPLAYED ON PROGRAM GUIDE
S2702
DISPLAY WINDOW THAT SELECTABLY DISPLAYS SEARCH NAVIGATOR AND RELATED PROGRAM LIST
S2703
RECEIVE SELECTION OF RELATED PROGRAM LIST
S2704
ACQUIRE METADATA OF CONTENTS BELONGING TO CATEGORY TO BE DISPLAYED
S2705
RETRIEVE METADATA OF KEY CONTENT
S2706
CALCULATE RELATION OF OTHER CONTENTS TO KEY CONTENT
S2707
GENERATE RELATED CONTENT LIST SCREEN
S2708
DISPLAY RELATED CONTENT LIST SCREEN
S2709
HAS OPERATION TO SWITCH CATEGORY BEEN RECEIVED?
S2710
NO
YES
ACQUIRE METADATA OF CONTENTS BELONGING TO NEW CATEGORY
S2711
CALCULATE RELATION OF OTHER CONTENTS TO KEY CONTENT
S2712
GENERATE RELATED CONTENT LIST SCREEN
S2713
DISPLAY RELATED CONTENT LIST SCREEN
S2714
HAS SELECTION OF CONTENT TO BE REPRODUCED OR RECORDED BEEN RECEIVED?
S2715
NO
YES
REPRODUCE OR RECORD SELECTED CONTENT
S2716
END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009198846 A
- JP 2004032624 A
- EP 1785814 A
- EP 1513341 A1
- EP 1804509 A1
- EP 1051034 A1
- US 2008313673 A1


### Non-patent literature cited in the description


- *Lunchtime Comedy Show,* 01 August 2008, vol. 12